(19)

Europäisches Patentamt
European Patent Office
Office européen des brevets

(11)  **EP 3 282 652 B1**

(12)  **EUROPEAN PATENT SPECIFICATION**

(45) Date of publication and mention
of the grant of the patent:
**27.11.2019  Bulletin 2019/48**

(21) Application number: **16776880.3**

(22) Date of filing: **07.04.2016**

(51) Int Cl.:
**H04N 21/61** *(2011.01)*          *H04N 21/47* *(2011.01)*

(86) International application number:
**PCT/KR2016/003654**

(87) International publication number:
**WO 2016/163777 (13.10.2016 Gazette 2016/41)**

(54) **METHOD AND APPARATUS FOR TRANSMITTING AND RECEIVING DATA IN WIRELESS COMMUNICATION SYSTEM**

VERFAHREN UND VORRICHTUNG ZUM SENDEN UND EMPFANGEN VON DATEN IN EINEM DRAHTLOSKOMMUNIKATIONSSYSTEM

PROCÉDÉ ET APPAREIL POUR TRANSMETTRE ET RECEVOIR DES DONNÉES DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **08.04.2015  IN 398KO2015**

(43) Date of publication of application:
**14.02.2018  Bulletin 2018/07**

(73) Proprietor: **Samsung Electronics Co., Ltd.**
**Suwon-si, Gyeonggi-do 16677 (KR)**

(72) Inventors:
• **CHANG, Young-Bin**
**Suwon-si**
**Gyeonggi-do 16677 (KR)**
• **KWON, Sang-Wook**
**Suwon-si**
**Gyeonggi-do 16677 (KR)**
• **KIM, Kyung-Kyu**
**Suwon-si**
**Gyeonggi-do 16677 (KR)**

• **MOK, Young-Joong**
**Suwon-si**
**Gyeonggi-do 16677 (KR)**
• **AGIWAL, Anil**
**Suwon-si**
**Gyeonggi-do 16677 (KR)**
• **KWUN, Jong-Hyung**
**Suwon-si**
**Gyeonggi-do 16677 (KR)**

(74) Representative: **Nederlandsch Octrooibureau**
**P.O. Box 29720**
**2502 LS The Hague (NL)**

(56) References cited:
**EP-A1- 2 672 721        WO-A1-2014/033570**
**JP-A- 2005 210 491        KR-A- 20100 060 717**
**KR-A- 20110 002 997        US-A1- 2012 019 633**
**US-A1- 2014 211 696**

**Description**

Technical Field

The present disclosure relates to a method and an apparatus for transmitting and receiving data in a wireless communication system supporting Device-to Device-Communication (D2D communication).

Background Art

In order to meet wireless data traffic demands, which have increased since the commercialization of a 4th-Generation (4G) communication system, efforts to develop an improved 5th-Generation (5G) communication system or a pre-5G communication system have been made. -For this reason, the 5G communication system or the pre-5G communication system is called a beyond-4G-network communication system or a post-Long-Term Evolution (LTE) system. EP 2 672 721 A1 relates to an image display apparatus, mobile terminal and method for operating the same.

In order to achieve a high data transmission rate, an implementation of the 5G communication system in an mmWave band (for example, 60 GHz band) is being considered. In the 5G communication system, technologies such as beamforming, massive MIMO, Full Dimensional MIMO (FD-MIMO), an array antenna, analog beam-forming, and a large scale antenna are being discussed to mitigate propagation path loss in the mmWave band and increase a propagation transmission distance.

Further, technologies such as an evolved small cell, an advanced small cell, a cloud Radio Access Network (cloud RAN), an ultra-dense network, Device-to-Device communication (D2D), a wireless backhaul, a moving network, cooperative communication, Coordinated Multi-Points (CoMP), and interference cancellation have been developed to improve the system network in the 5G communication system.

In addition, Advanced Coding Modulation (ACM) schemes such as Hybrid FSK and QAM Modulation (FQAM) and Sliding Window Superposition Coding (SWSC), and advanced access technologies such as Filter Bank Multi Carrier (FBMC), Non-Orthogonal Multiple Access (NOMA), and Sparse Code Multiple Access (SCMA) have been developed for the 5G system.

Recently, portable devices provide sounds and packet data communication to electronic devices based on Bluetooth technology or Wi-Fi direct technology through short-range wireless communication. Particularly, Bluetooth technology is a standard of short-range wireless technology for forming pairing connections between a master device and a slave device such as portable devices including mobile phones, notebooks, earphones, headsets, smart phones, speakers, and the like, and may use a maximum of seven different devices, wirelessly connected to each other within a distance equal to or shorter than 10m. For example, a Bluetooth headset using Bluetooth technology is a device that outputs audio data from a Moving Picture Experts Group-1 Audio Layer-3 (MP3) player through a frequency of 2.4 GHz without any cable. Here, the MP3 player may be a transmission device and the Bluetooth headset may be a reception device.

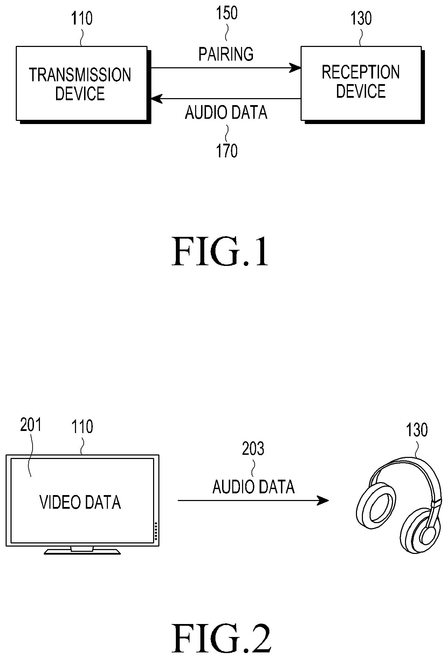

Hereinafter, an example of a method of transmitting/receiving audio data between a transmission device and a reception device based on conventional Bluetooth technology will be described with reference to FIG. 1.

FIG. 1 illustrates an example of a method of transmitting/receiving audio data based on conventional Bluetooth technology.

Referring to FIG. 1, before transmitting/receiving audio data, a transmission device 110 and a reception device 130 are required to perform a pairing operation in which operation clocks and frequency patterns are synchronized to configure a new connection state, as indicated by reference numeral 150. The pairing operation includes an inquiry operation, an inquiry scan operation, a page operation, and a page scan operation. The inquiry operation is an operation in which the transmission device 110 repeatedly outputs an operation frequency so that the reception device 130 may synchronize a frequency pattern with the transmission device 110, and the inquiry scan operation corresponds to a process performed by the reception device 130 in which the reception device 130 detects the received frequency and is synchronized with the detected frequency. The page operation is an operation in which the transmission device 110 outputs a clock signal so that the reception device 130 is synchronized with an operation clock of the transmission device 110, and the page scan operation is an operation in which the reception device 130 detects the received clock and is synchronized with the clock.

After the pairing process 150 between the transmission device 110 and the reception device 130 is completed, the transmission device 110 decodes a music file stored in an internal memory, encodes the decoded data based on a codec designated to a music profile (for example, advanced audio distribution profile: A2DP) of Bluetooth, and transmits the audio data to the reception device 130 as indicated by reference numeral 170. Thereafter, the transmission device 110 may perform hopping to new frequencies so as to avoid interference from other signals.

After receiving the audio data transmitted from the transmission device 110 on a frequency and at a clock time appointed together with the transmission device 100, the reception device 130 performs a frequency-hopping process, a decoding process, and an analog signal conversion process on the received audio data and outputs the converted audio data through the output unit. The reception device 130 may receive and output successive audio data by repeating the processes.

As described above based on FIG. 1, the Bluetooth technology necessarily requires the pairing process, and accordingly limits the number of devices that may provide service at the same time. Therefore, the Bluetooth technology is not suitable for broadcasting service that requires that the number of devices providing service at the same time be unlimited.

The transmission device 110 may output video data simultaneously with transmitting the audio data to the reception device 130, as illustrated in FIG. 2.

FIG. 2 illustrates an example of a method of outputting video data and audio data based on the conventional Bluetooth technology.

Referring to FIG. 2, in a transmission scheme using the conventional Bluetooth technology, as indicated by reference numeral 203, the transmission device 110 may transmit audio data to the reception device 130 simultaneously with outputting video data through an internal output unit, as indicated by reference numeral 201. At this time, only when the video data output from the transmission device 110 and the audio data output from the reception device 130 are synchronized with each other may a user receive high-quality service.

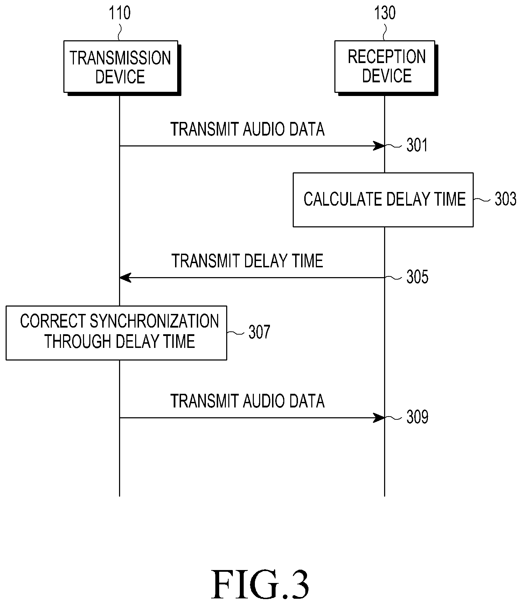

FIG. 3 illustrates an example of a method of synchronizing data provided from the transmission device and the reception device.

Referring to FIGs. 2 and 3, when video data and audio data, which is required to be synchronized with the video data, are output from different devices, the transmission device 110 may not accurately predict a delay time generated in a buffering process or a decoding process of the reception device 130. Due to this problem, the video data output from the transmission device 110 and the audio data output from the reception device 130 may not be synchronized.

In order to solve this problem, the transmission device 110 first transmits the audio data to the reception device 130 in step 301. Then, the reception device 130 receives the audio data, calculates a delay time which may be generated in a buffering process, a decoding process, and a rendering process of the received audio data in step 303, and transmits the calculated delay time to the transmission device 110.

Accordingly, the transmission device 110 corrects synchronization between the output video data and the transmitted audio data based on the delay time received from the reception device 130 in step 307. For example, the transmission device 110 may cause the video data from the transmission device 110 and the audio data from the reception device 130 be simultaneously output (that is, reproduced) by first transmitting audio data having large media streams, dropping or copying image frames, or controlling the output time of the video data.

As described above based on FIGs. 2 and 3, in the transmission device 110 and the reception device 130 having performed the pairing operation therebetween, the transmission device 110 should directly perform synchronization based on information received from the reception device 130, and thus the conventional Bluetooth technology is not suitable for broadcasting service requiring that no limitation be imposed on the number of devices that provide service at the same time.

Detailed Description of the Invention

Technical Problem

An embodiment of the present disclosure provides a method and an apparatus for performing a search process between a transmission device and a reception device in a wireless communication system supporting D2D communication.

An embodiment of the present disclosure provides a method and an apparatus for allocating resources to transmit video-related data in a wireless communication system supporting D2D communication.

An embodiment of the present disclosure provides a method and an apparatus for synchronizing video data and video-related data in a wireless communication system supporting D2D communication.

An embodiment of the present disclosure provides a method and an apparatus for transmitting/receiving synchronized data between a transmission device and a reception device in a wireless communication system supporting D2D communication. Technical solution

In accordance with an aspect of the present disclosure, a method of transmitting data by a transmission device in a wireless communication system supporting device-to-device communication is provided, in accordance with claim 1.

In accordance with another aspect of the present disclosure, a method of receiving data by a reception device in a wireless communication system supporting device-to-device communication is provided, in accordance with claim 8.

In accordance with another aspect of the present disclosure, an apparatus for transmitting data by a transmission device or for receiving data by a reception device, in a wireless communication system supporting device-to-device communication is provided, in accordance with claim 15.

Other aspects, gains, and core features of the present disclosure are processed along with additional drawings, and they are apparent to those skilled in the art from the following detailed description including exemplary embodiments of the present disclosure.

The terms "include", "comprise", and derivatives thereof may mean inclusion without limitation, the term "or" may have an inclusive meaning and means "and/or", the phrases "associated with", "associated therewith", and derivatives thereof may mean to include, be included within, interconnect with, contain, be contained within, connected to or with, coupled to or with, be communicable with, cooperate with, interleave, juxtapose, be proximate to, be bound to or with, have, and have a property of, the term "controller" may mean any device, system, or a part thereof that controls at least one operation, and such a device may be implemented in hardware, firmware, or software, or some combinations of at least two of the same. It should be noted that the functionality associated with any particular controller may be centralized or distributed, whether locally or remotely. Definitions for certain words and phrases are provided throughout this patent document, those skilled in the art should understand that in many, if not most instances, such definitions apply to prior, as well as future uses of such defined words and phrases.

Brief Description of the Drawings

FIG. 1 illustrates an example of a method of transmitting/receiving audio data based on conventional Bluetooth technology;
FIG. 2 illustrates an example of a method of outputting video data and audio data based on conventional Bluetooth technology;
FIG. 3 illustrates an example of a synchronization method between pieces of data provided by a transmission device and a reception device of FIG. 2;
FIG. 4 illustrates an example of a wireless communication system according to an embodiment of the present disclosure;
FIG. 5 illustrates an example of a method by which the transmission device and the reception device perform a discovery process in a communication system according to an embodiment of the present disclosure;
FIG. 6 illustrates another example of the method by which the transmission device and the reception device perform the discovery process in the communication system according to an embodiment of the present disclosure;
FIG. 7 illustrates the configuration of discovery code allocated by a server according to an embodiment of the present disclosure;
FIG. 8 illustrates an example in which the reception device included in the wireless communication system outputs a UI according to an embodiment of the present disclosure;
FIG. 9 illustrates an example of a method by which the transmission device receives resources and transmits video-related data in the wireless communication system according to an embodiment of the present disclosure;
FIG. 10 illustrates an example of the configuration of a resource allocation request message through which the transmission device makes a request for allocating resources according to an embodiment of the present disclosure;
FIG. 11 illustrates an example of a method by which the transmission device makes a request for allocating resources according to an embodiment of the present disclosure;
FIG. 12 illustrates an example of a method by which an eNB allocates resources according to an embodiment of the present disclosure;
FIG. 13 illustrates an example of allocating resources in an LTE cellular system;
FIG. 14 illustrates an example of a method by which the reception device receives audio data required to be synchronized according to an embodiment of the present disclosure;
FIG. 15 illustrates another example of the method by which the reception device receives audio data required to be synchronized according to an embodiment of the present disclosure;
FIG. 16 illustrates another example of the method by which the transmission device transmits video-related data in the wireless communication system according to an embodiment of the present disclosure;
FIG. 17 illustrates an example of a method of synchronizing data transmitted/received from the transmission device and the reception device according to an embodiment of the present disclosure;
FIG. 18 illustrates an example in which the transmission device and the reception device apply a data synchronization method according to an embodiment of the present disclosure;
FIG. 19 illustrates an example of a method by which the transmission device and the reception device output data according to an embodiment of the present disclosure;
FIG. 20 illustrates another example of the method by which the transmission device and the reception device output data according to an embodiment of the present disclosure;
FIG. 21 illustrates another example of a method by which the transmission device transmits audio data when the absolute time between the transmission device and the reception device is not synchronized according to an embodiment of the present disclosure;

FIG. 22 illustrates another example of a method by which the reception device outputs audio data when the absolute time between the transmission device and the reception device is not synchronized according to an embodiment of the present disclosure;

FIG. 23 illustrates another example of the method by which the transmission device transmits audio data when the absolute time between the transmission device and the reception device is synchronized according to an embodiment of the present disclosure;

FIG. 24 illustrates another example of the method by which the reception device outputs audio data when the absolute time between the transmission device and the reception device is synchronized according to an embodiment of the present disclosure;

FIG. 25 schematically illustrates an example of the internal structure of the transmission device that transmits data in the communication system according to an embodiment of the present disclosure; and

FIG. 26 schematically illustrates an example of the internal structure of the reception device that receives data in the communication system according to an embodiment of the present disclosure.

It should be noted that similar reference numerals are used to indicate identical or similar elements, features, and structures throughout the above figures.

Mode for Carrying out the Invention

Although the following detailed description includes various specific concrete explanations to assist with understanding, they are considered to be only examples. Accordingly, those skilled in the art may recognize that various modifications and changes of the various embodiments described herein can be made without departing from the scope of the present disclosure. Further, descriptions of the known functions and elements can be omitted for clarity and brevity.

The terms and words used in the following detailed description and the claims are not limited to literal meanings, and are simply used for helping obtain a clear and consistent understanding of the present disclosure. Therefore, it should be apparent to those skilled in the art that the following description of various embodiments of the present disclosure is provided for illustrative purposes only, and is not intended to limit the present disclosure that is defined by the appended claims.

Although the terms including an ordinal number such as first, second, etc. can be used for describing various elements, the structural elements are not restricted by the terms. The terms are used merely for the purpose to distinguish an element from the other elements. For example, a first element could be termed a second element, and similarly, a second element could be also termed a first element without departing from the scope of the present disclosure. As used herein, the term "and/or" includes any and all combinations of one or more associated items.

The terms used herein are used only to describe particular embodiments, and are not intended to limit the present disclosure. In the present disclosure, the terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

Unless defined otherwise, all terms used herein, including technical and scientific terms, have the same meaning as commonly understood by those of skill in the art to which the present disclosure pertains. Such terms as those defined in a generally used dictionary are to be interpreted to have the meaning equal to the contextual meaning in the relevant field of art.

Based on the main subject of the present disclosure, a transmission device in a communication system divides video data and video-related data, which is simultaneously output with the video data, in one video container data, outputs the video data, and transmits a message containing the video-related data and information on a time point at which the video data is output to a reception device, and the reception device outputs video-related data based on the information on the time point at which the video data is output such that the video-related data is synchronized with the video data output from the transmission device. Here, the video-related data is media data, required to be synchronized with the video data, and may be, for example, at least one of audio data, text, and video.

To this end, a method and an apparatus for transmitting/receiving data in a wireless communication system according to an embodiment of the present disclosure will be described in detail.

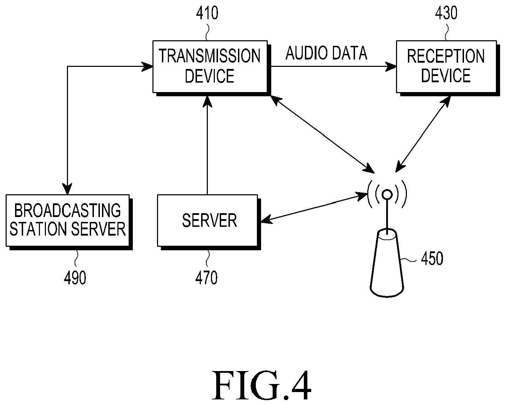

FIG. 4 illustrates an example of a wireless communication system according to an embodiment of the present disclosure.

Referring to FIG. 4, the wireless communication system according to an embodiment of the present disclosure includes a transmission device 410 and a reception device 430. Additionally, the wireless communication system may further include at least one of a wireless node 450 for managing radio resources, a server 470 for transmitting/receiving media data to/from the transmission device 410 and the reception device 430, and a broadcasting device 490 for supporting ground-wave broadcasting.

The transmission device 410 may be, for example, a display device that provides video, and the reception device 430 may be, for example, a play device that outputs at least one of images, characters and audio data. Further, the broadcasting device 490 may be, for example, a broadcasting station.

The transmission device 410 communicates with the reception device 430 or the wireless node 450. More specifically, the transmission device 410 may receive one video container data from the server 470 or the broadcasting device 490 or store one video container data therein. The transmission device 410 decodes content corresponding to the video container data and separates video data and video-related data that should be synchronized with the video data. The transmission device 410 outputs the video data through a video output unit and transmits the video-related data to the reception device 430 or the wireless node 450. At this time, the wireless node 450 may be a base station when the wireless communication system is a broadband wireless communication system, and may be an Access Point (AP) when the wireless communication system is a WLAN system. Hereinafter, although the case in which the wireless node 450 is the base station is described as an example for convenience of description for an embodiment of the present disclosure, the wireless node 450 may be the AS, depending on the communication system.

Methods by which the transmission device 410 transmits the video-related data to the reception device 430 or the wireless node 450 may be broadly divided into three methods.

First, the transmission device 410 may transmit the video-related data to another device through a broadcasting scheme. For example, the transmission device 410 may transmit video-related data to all reception devices 430 authorized to use a D2D communication scheme from a communication company in the broadband communication system.

Second, in order to transmit the video-related data only to reception devices 430 included in a particular group, the transmission device 410 may transmit the video-related data to grouped reception devices 430 (groupcast).

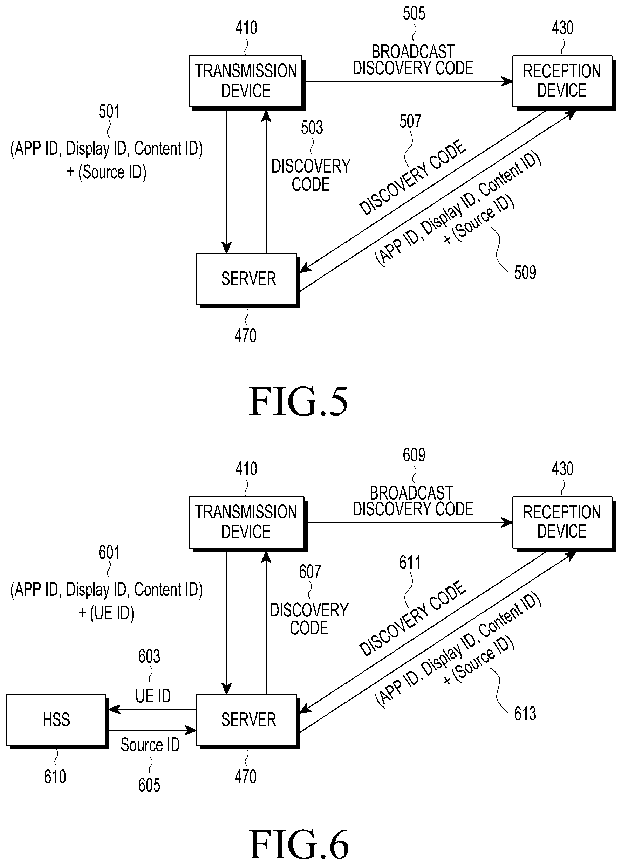

Third, the transmission device 410 may transmit the video-related data to one particular reception device 430 through a unicast scheme. For example, the transmission device 410 may transmit video-related data only to a particular reception device 430 among reception devices authorized to use a D2D communication scheme from a communication company in the broadband communication system. The example of the methods by which the transmission device 410 transmits the video-related data will be described in detail with reference to FIGs. 5 to 24.

Referring back to FIG. 1, the reception device 430 communicates with the transmission device 410 or the wireless node 450. The reception device 430 receives video-related data, which should be synchronized with video data, from the transmission device 410 or the wireless node 450. When the video-related data is audio data, the reception device 430 decodes the audio data, synchronizes the decoded audio data with the video data, and outputs the synchronized audio data through an internal audio output unit (for example, an audio device or an aux-out device such as headphones or earphones). When the video-related data is text data (for example, subtitles), the reception device 430 synchronizes the text data with the video data and outputs the synchronized text data through an internal video output unit. Hereinafter, for example, it is assumed that the video-related data is audio data for convenience of description. The detailed operation of the reception device 430 will be described with reference to FIGs. 5 to 24.

The wireless node 450 serves to manage and control radio resources used for transmitting/receiving video-related data between the transmission device 410 and the reception device 430. For example, the wireless node 450 may allocate radio resources to the transmission device 410 for a predetermined time in response to a resource request from the transmission device 410. In another example, the wireless node 450 may designate a radio resource pool, which can be used for the purpose of communication between the transmission device 410 and the reception device 430 and provide notification of radio resources allocated to each of the transmission device 410 and the reception device 430.

The server 470 provides video data or video-related data to the transmission device 410, the reception device 430, or the wireless node 450.

The broadcasting device 490 refers to a broadcasting station that currently broadcasts digital ground waves and may transmit broadcast content through a separate output device such as a wireless antenna or a coaxial cable.

The communication system according to an embodiment of the present disclosure may include another entity constituting the network as well as the devices illustrated in FIG. 4. For example, when the communication system is a broadband communication system, the communication system may include at least one of a Mobility Management Entity (MME) for supporting mobility, a serving gateway for performing a function of connecting the transmission device 410 and the reception device 430 to an external network, a packet gateway for connecting the serving gateway to an IP network such as an application server, a Home Subscriber Server (HSS) for managing subscriber profiles for the transmission device 410 and the reception device 430 and providing the subscriber profiles to the MME, and a node for generating and managing a policy and a charging rule for mobile communication service between the packet gateway and the IP network. The node taking charge of the charging may manage charging for data in D2D communication.

For data transmission/reception operation between the transmission device 410 and the reception device 430 in the communication system, the transmission device 410 should first discover the reception device 430 to/from which the transmission device 410 transmit/receives data. To this end, hereinafter, embodiments for performing a discovery process that supports device discovery or information discovery between the transmission device 410 and the reception device 430 in the communication system according to an embodiment of the present disclosure will be described based on FIGs. 5 to 8.

FIG. 5 illustrates an example of a method by which the transmission device and the reception device perform a discovery process in the communication system according to an embodiment of the present disclosure.

Referring to FIG. 5, the transmission device 410 performs a process of receiving a discovery code from the server 470. At this time, it is assumed that the transmission device 410 currently outputs video data through an application and an output unit.

More specifically, the transmission device 410 transmits allocation request information for receiving the discovery code to the server 470, as indicated by reference numeral 501. The allocation request information contains at least one of an application ID, a display ID, and a content ID, and further contains its own source ID. The application ID contained in the allocation request information is an identifier used in an application area and may include, for example, Gom player, YouTube, and the like. The application ID may be used only when it is registered and authorized based on a policy of the server 470. The display ID refers to an identifier for identifying the transmission device 410, and may include a device ID, a subscriber ID, or an ID designated by the user. Further, the content ID refers to an identifier for identifying audio data transmitted from one transmission device 410, and the transmission device 410 may manage one or more content IDs. For example, when broadcast content supports audio data including three languages, the content ID may be separately allocated for each of the respective languages. In another example, when all or part of the audio data is downloaded from the server 470, information on a Uniform Resource Locator (URL) from which the audio data can be acquired may be inserted into the content IDs. In yet another example, when the transmission device 410 outputs multiple screens (Picture In Picture: PIP), audio data corresponding to the video data may be divided based on the content IDs. As described above, the content ID may divide actual information related to the audio data. The application ID, the display ID, and the content ID may have a hierarchical structure according to a management policy. Further, the source ID is an ID used by a radio transmission layer of the transmission device 410.

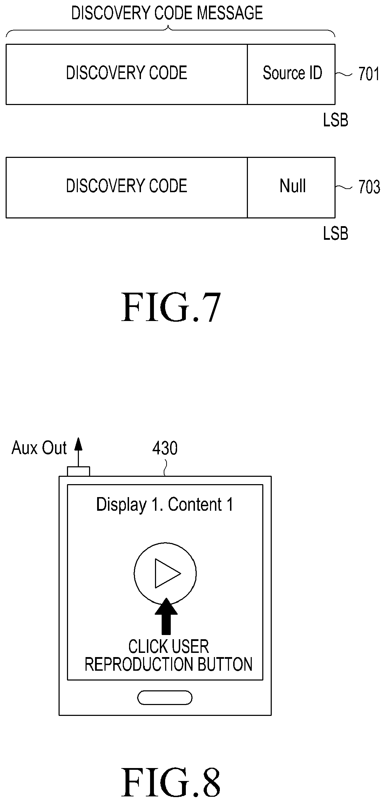

The server 470, having received the allocation request information from the transmission device 410, stores the received allocation request information and allocates a discovery code mapped to the stored allocation request information to the transmission device 410, as indicated by reference numeral 503. For example, the server 470 may allocate the discovery code to the transmission device 410, as illustrated in FIG. 7.

FIG. 7 illustrates the configuration of the discovery code allocated by the server according to an embodiment of the present disclosure.

Referring to FIG. 7, the server 470 may directly insert the source ID into a portion of an area (for example, LSB) of the discovery code or empty the portion of the area to allocate the discovery code to the transmission device 410, as indicated by reference numeral 703.

Referring back to FIG. 5, the transmission device 410, having received the discovery code from the server 470, receives resources or competes in a designated resource area to periodically broadcast the discovery code as indicated by reference numeral 505. At this time, when the partial space of the discovery code is empty, the transmission device 410 directly inserts its own source ID and transmits the discovery code to the reception device 430. On the other hand, when the partial space of the discovery code is not empty, the transmission device 410 transmits the discovery code received from the server 470 to the reception device 430 without any change.

The discovery process in the case in which the source ID of the transmission device 410 is included in the allocation request information transmitted by the transmission device 410 has been described above based on FIG. 5, and a discovery process in the case in which the source ID of the transmission device 410 is not included in the allocation request information transmitted by the transmission device 410 will be described below based on FIG. 6.

FIG. 6 illustrates another example of the method by which the transmission device and the reception device perform the discovery process in the communication system according to an embodiment of the present disclosure. The other example of the method of performing the discovery process illustrated in FIG. 6 is performed in a similar way to the example of the method of performing the discovery process illustrated in FIG. 5. However, in the embodiment of FIG. 6, if the transmission device 410 does not have its own source ID, the transmission device 410 transmits allocation request information including its own unique ID (e.g. ITMGI) instead of its own source ID to the server 470 as indicated by reference numeral 601. Then, the server 470 transmits the unique ID to an HSS 610 as indicated by reference numeral 603 and receives the source ID of the transmission device 410 from the HSS 610 as indicated by reference numeral 605.

Since the processes 607 to 613 in which the transmission device 410 and the reception device 430 receive the discovery code after the server 470 receives the source ID from the HSS 610 are the same as the processes 503 to 509 in which the transmission device 410 and the reception device 430 receive the discovery code in FIG. 5, a detailed description thereof will be omitted herein.

As for the discovery process described based on FIGs. 5 and 6, when the reception device 430 periodically receives and acquire the discovery code, the reception device 430 transmits the acquired discovery code to the server 470 in order to identify allocation request information mapped to the acquired discovery code as indicated by reference numeral 507. Meanwhile, when the reception device 430 recognizes that the source ID is inserted into the acquired discovery code based on predetermined settings, the reception device 430 may acquire the allocation request information by parsing the corresponding source ID without transmitting the acquired discovery code to the server 470.

Thereafter, when the server 470 receives the discovery code from the reception device 430, the server 470 transmits the allocation request information mapped to the discovery code within the internal memory to the reception device 430 as indicated by reference numeral 509. Accordingly, the reception device 430 may acquire the application ID, the display ID, the content ID, and the source ID from the server 470. Further, the reception device 430 receives a data packet transmitted from the same transmission device later based on the acquired source ID. In addition, when the reception device 430 discovers a relevant application based on the application ID, the reception device 430 may transmit the display ID and the content ID to an application area of an internal video output unit and separately output the display ID and the content ID through a predetermined operation. For example, the reception device 430 may output a UI for selecting and reproducing audio data in the application area of the internal video output unit, as illustrated in FIG. 8.

FIG. 8 illustrates an example in which the reception device included in the wireless communication system outputs a UI according to an embodiment of the present disclosure.

Referring to FIG. 8, when there is a User Interface (UI) on the display of the reception device 430, the display ID and the content ID that are acquired in FIG. 5 or 6 may be output through the reception device 430 in order to allow the user to conveniently select desired content. For example, assume that one TV broadcasts multi-language content, that the display ID is Tv1 corresponding to the transmission device ID, and that content IDs correspond to Korean, English, and Chinese. At this time, when Tv.1 Korean is output on the reception device 430, "English" and "Chinese" may be shown, and may be capable of being selected using selection, scrolling, or choosing the next in a list as desired by the user. In another example, when different TVs broadcast the same content, different display IDs are transmitted to the respective TVs and Tv1 and Tv2 are output on the reception device 410, and content IDs corresponding to news are displayed and output as Tv1. news and Tv2. news.

Thereafter, when the reception device 430 receives a selection event such as clicking a play button by a user who selects the display ID and the content ID, the reception device 430 may output audio data through earphones, headphones, or the like using an internal speaker or Aux Out. The operation for outputting the UI on the video output unit of the reception device 430 may vary depending on settings of the application, and the three IDs may be shown or hidden as necessary. For example, when the content ID corresponds to link information containing information on a thumbnail, the reception device 430 may receive and output the corresponding link information.

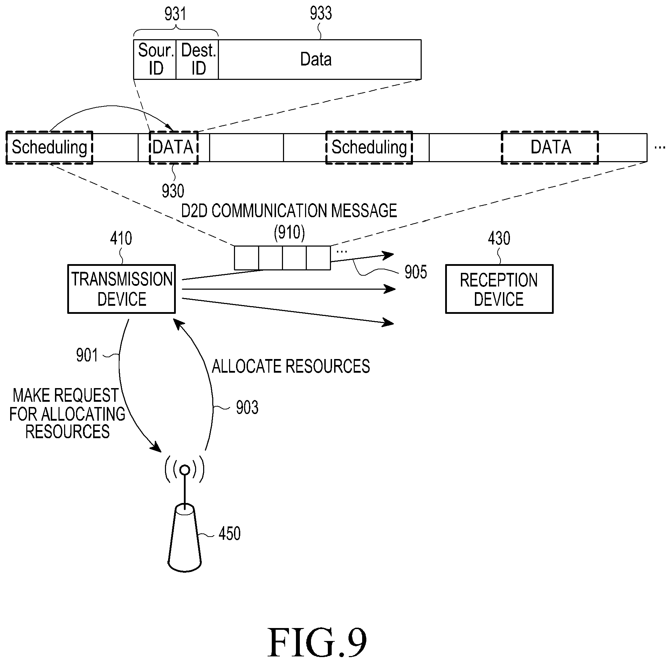

The method by which the transmission device 410 and the reception device 430 perform the discovery process and the method of outputting the UI on the reception device 430 in the wireless communication system according to an embodiment of the present disclosure have been described above with reference to FIGs. 5 to 8, and a method by which the transmission device 410 receives resources and transmits video-related data to the reception device 430 after the transmission device 410 and the reception device 430 perform the discovery process will be described below with reference to FIGs. 9 to 13. Here, the video-related data corresponds to data required to be synchronized with video data output from the transmission device 410, and it is assumed that the data required to be synchronized with the video data is audio data for convenience of description. However, an embodiment of the present disclosure can be applied not only to the case in which the data required to be synchronized is audio data but also to the case in which the data required to be synchronized is video data, image data, or text.

FIG. 9 illustrates an example of a method by which the transmission device receives resources and transmits video-related data in the wireless communication system according to an embodiment of the present disclosure. The embodiment of the present disclosure relates to a method by which the transmission device 410 transmits audio data required to be synchronized to the reception device 430 through D2D communication after the discovery process between the transmission device 410 and the reception device 430 is completed.

Referring to FIG. 9, the transmission device 410 may transmit a resource allocation request message that makes a request for allocating resources for D2D communication to the eNB 450 in order to transmit audio data required to be synchronized with video data output to the reception device 430 as indicated by reference numeral 901. The resource allocation request message may be a general Buffer Status Report (BSR) message.

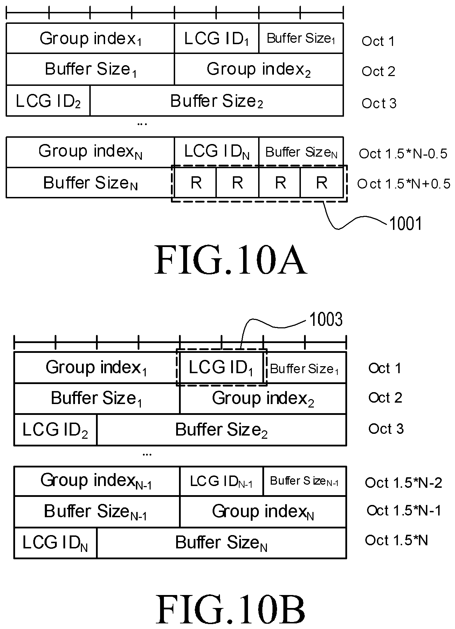

When the eNB 450 receives the resource allocation request message from the transmission device 410, the eNB 450 identifies that the resource allocation request message is for making a request for allocating resources for the transmission of audio data that is required to be synchronized, and may allocate resources to satisfy a Quality of Service (QoS) of the audio data that is required to be synchronized. That is, in order to satisfy the QoS of the audio data that is required to be synchronized, the eNB 450 must allocate resources such that latency does not occur when the transmission device 410 transmits the audio data that is required to be synchronized. As described above, in order to make the eNB 450 identify that the resource allocation request message corresponds to the request for allocating resources for the transmission of audio data that is required to be synchronized from the transmission device 410, the transmission device 410 according to an embodiment of the present disclosure may insert information (indication) indicating the request for resources for transmission of the audio data required to be synchronized into the resource allocation request message. For example, the resource allocation request message may be configured as illustrated in FIG. 10 in an LTE cellular system.

FIG. 10 illustrates an example of the configuration of the resource allocation request message that makes a request for allocating resources by the transmission device according to an embodiment of the present disclosure.

Referring to FIG. 10, information (indication) indicating the request for resources for the transmission of audio data that is required to be synchronized may be contained in the resource allocation request message, as illustrated in FIG. 10A or 10B.

In the resource allocation request message illustrated in FIG. 10A, one bit is inserted into one field as information (indication) indicating a request for resources for the transmission of audio data required to be synchronized in a reserved bit field 1001. For example, when making the request for allocating resources, the transmission device 410 configures, as "1", a reserved bit for the information (indication) indicating the request for resources for transmission of the audio data required to be synchronized and transmits the request to the eNB 450. Then, the eNB 450 identifies that the request made by the transmission device 410 corresponds to the request for resources for transmission of the audio data required to be synchronized based on the reserved bit contained in the resource allocation request message and allocates the resources such that a QoS of the audio data required to be synchronized is satisfied.

In another method, information (indication) indicating the request for resources for transmission of the audio data required to be synchronized is inserted into a Logical Channel Group (LCG) ID field 1003 in the resource allocation request message illustrated in FIG. 10A. For example, the transmission device 410 configures the LCG ID such that a preset value is used as a value corresponding to the information (indication) indicating the request for resources for transmission of the audio data required to be synchronized between the transmission device 410 and the eNB 450. When the transmission device 410 transmits the resource allocation request message containing the preset LCG ID value to the eNB 450, the eNB 450 may identify that the resource allocation request message is a request for resources for the transmission of audio data that is required to be synchronized.

Referring back to FIG. 9, the transmission device 410, having received resources from the eNB 450, configures a communication message 910 for D2D communication and transmits the communication message to the reception device 430, as indicated by reference numeral 905. In the communication message 910 configured by the transmission device 410, a header field and data are included in resources of a data region 930. The header includes a source ID and a destination ID as information 931 on the audio data required to be synchronized. Further, the data field includes audio data 933 required to be synchronized. The transmission device 410 may insert the source ID acquired from the embodiment described based on FIG. 5 to 6 into the header field. Further, since the destination ID is predefined or previsioned, the transmission device 410 may insert an already known value of the destination ID into the header field.

The reception device 430 may be made aware of the source ID of the transmission device 410 through the embodiment described based on FIG. 5 or 6. Accordingly, the reception device 430 outputs a list of audio data currently broadcasted on the internal video output unit, as illustrated in the embodiment of FIG. 8. When the reception device 430 receives an event of selecting audio data required to be synchronized from the user through the video output unit, the reception device 430 decodes a data region (for example, 930) including the corresponding source ID in the communication message 910 and outputs the decoded audio data through an audio device or an aux-out device such as headphones or earphones.

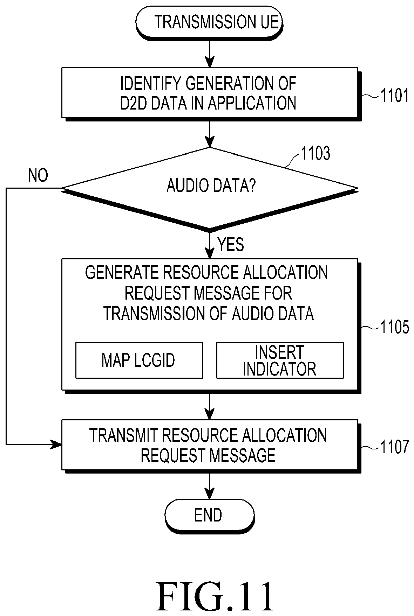

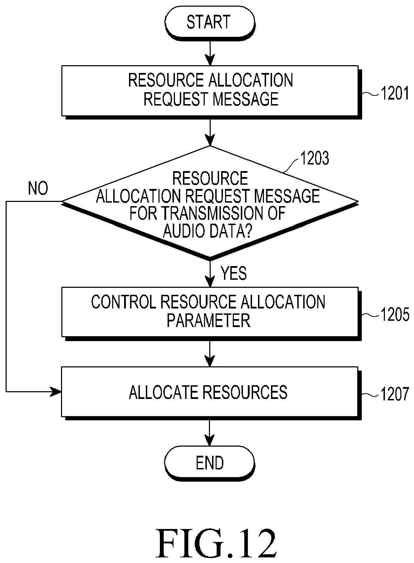

The method by which the transmission device 410 receives resources from the eNB 450 and transmits the communication message in the wireless communication system according to an embodiment of the present disclosure has been described above with reference to FIGs. 9 and 10, and the method by which the transmission device 410 transmits the resource allocation request message to the eNB 450 described with reference to FIG. 9 will be described below with reference to FIG. 11 and the method by which the eNB 450 allocates resources will be described below with reference to FIG. 12. Although the case in which the embodiment of the present disclosure is applied to the broadband communication system is described as an example for convenience of description, the embodiment of the present disclosure can be applied to other equivalent systems.

FIG. 11 illustrates an example of a method by which the transmission device makes a request for allocating resources according to an embodiment of the present disclosure.

When data is generated from an application, the transmission device 410 according to an embodiment of the present disclosure maps the generated data to a logical channel ID, and classifies and manages the data in the buffer of a Radio Link Control (RLC) layer. At this time, the characteristics of the logical channel ID, such as security and priority, may be different. Further, logical channel IDs are divided into LCG IDs grouped by IDs having similar characteristics. The LCGID and the LCID may be prearranged in communication between UEs and may be set by the eNB 450 as necessary.

Referring to FIG. 11, when data for D2D communication is generated in an application in step 1101, the transmission device 410 identifies whether the generated data is audio data required to be synchronized in step 1103.

When the generated data is audio data, the transmission device 410 generates a resource allocation request message containing information (indication) indicating a request for resources for the transmission of the audio data required to be synchronized in step 1105. That is, when the generated data is the audio data, the transmission device 410 maps the audio data to an LICD or an LCGID group preset for transmission of the audio data (hereinafter, referred to as D2D audio broadcasting). The LCID or the LCGID may be already mapped to particular parameter values for D2D audio broadcasting. At this time, when there is neither LCID nor LCGID for D2D audio broadcasting, the transmission device 410 may insert an indicator indicating the request for resources for transmission of the audio data required to be synchronized into the resource request message (for example, may configure one of the reserved bits to be a predetermined set value).

However, when the generated data is not the audio data, the transmission device 410 may map the generated data to an LCID or an LCGID group preset for D2D data and generate a resource allocation request message.

Thereafter, in order to receive resources, the transmission device 410 transmits the resource allocation request message to the eNB 450. At this time, the resource request message may be a BSR.

FIG. 12 illustrates an example of a method by which the eNB allocates resources according to an embodiment of the present disclosure.

Referring to FIG. 12, the eNB 450 receives a resource allocation request message from the transmission device 410 in step 1201. The eNB 450 identifies whether the resource allocation request message contains information indicating the request for resources for transmission of the audio data in step 1203. For example, when an LCG ID contained in the resource allocation request message matches a mapped LCG ID for preset audio broadcasting, the eNB 450 determines that the transmission device 410 makes a request for resources for transmission of the audio data required to be synchronized. In another example, when an indicator (prearranged value) indicating the request for resources for transmission of the audio data required to be synchronized is inserted into the resource allocation request message, the eNB 450 may determine that the transmission device 410 makes a request for resources for transmission of the audio data required to be synchronized.

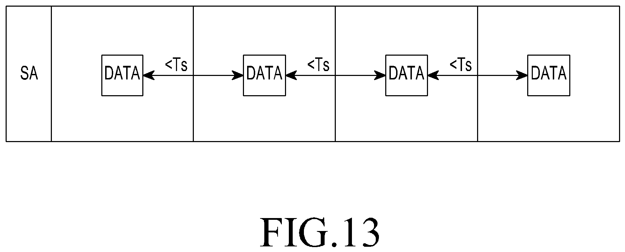

When the resource allocation request message is to make a request for resources for transmission of the audio data required to be synchronized, the eNB 450 controls a resource allocation-related parameter in step 1205. For example, the eNB 450 controls an allocation period for resources in the data region 930 illustrated in FIG. 9. At this time, in the case of audio data, the eNB 450 allocates resources in the semi-persistent form in order to satisfy QoS, wherein the resources are allocated to be equal to or smaller than a maximum delay time for QoS of the audio data required to be synchronized. For example, the eNB 450 may allocate resources on the period illustrated in FIG. 13.

FIG. 13 illustrates an example of allocating resources in the LTE cellular system.

Referring to FIG. 13, the eNB 450 should allocate a resource allocation period of audio data to be equal to or smaller than Ts. Ts refers to a minimum time for satisfying QoS of audio data.

Accordingly, the eNB 450 allocates resources for transmission of the audio data based on the determined resource allocation period in step 1207.

The resource allocation information is transmitted to the UE through an SA message in a Scheduling Assignment (SA) interval. Therefore, the SA message may contain a physical resource location of data, a period of the data, and the like.

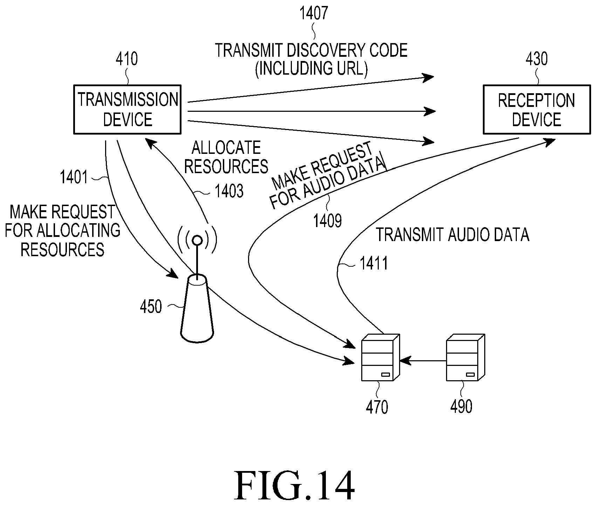

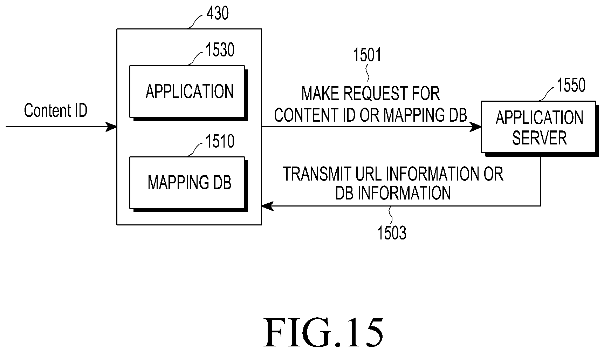

The method by which the transmission device 410 receives resources from the eNB 450 and transmits the resources has been described above with reference to FIGs. 9 to 13, and a method by which the reception device 430 receives audio data through at least one other device when the audio data is not stored in the transmission device 410 will be described below with reference to FIGs. 14 and 15.

FIG. 14 illustrates an example of a method by which the reception device receives audio data required to be synchronized according to an embodiment of the present disclosure. The embodiment described based on FIG. 14 corresponds to an embodiment of a method by which the reception device 430 receives audio data required to be synchronized through at least one other device after the discovery process is performed based on FIG. 5 or 6.

Referring to FIG. 14, in order to store audio data required to be synchronized in the server 470, the transmission device 410 transmits a resource allocation request message (BSR) to the eNB 450, as indicated by reference numeral 1401. Then, the eNB 450 allocates uplink resources to the transmission device 410, as indicated by reference numeral 1403. Then, the transmission device 410 transmits audio data required to be synchronized to the server 470 via the eNB 450, as indicated by reference numeral 1405. The server 470 may be, for example, a ProSe server or an evolved Multimedia Broadcasting Multicast Service (eMBMS) server in the LTE system. In another example, the broadcasting device 490 may transmit audio data required to be synchronized with video data to the server 470.

When the audio data has been completely transmitted to the server 470, the transmission device 410 provides the reception device 430 with information for receiving the audio data required to be synchronized through the discovery operation described based on FIG. 5 or 6 as indicated by reference numeral 1407. The information for receiving the audio data required to be synchronized may be a URL in the case of the server 470, and may be broadcasting channel information (that is, a Temporary Mobile Group Identity (TMGI)) in the case of the eMBMS.

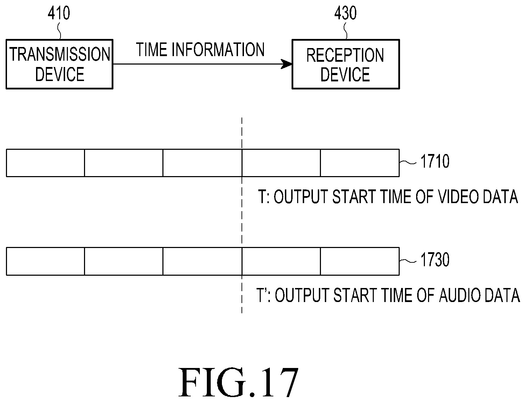

Then, the reception device 430 continuously receives a result of discovery between UEs. At this time, the video output unit of the reception device 430 outputs a list of audio data, required to be synchronized with the video data, which is currently broadcasted near the reception device 430. Further, when the reception device 430 receives an event for selecting one piece of audio data required to be synchronized in the list from the user through the video output unit, the reception device 430 identifies URL information included in the discovery code in response to the selected event. In addition, the reception device 430 makes a request for audio data required to be synchronized to the server 470 based on the identified URL information, as indicated by reference numeral 1409, and receives the audio data from the server 470, as indicated by reference numeral 1411. Then, the reception device 430 synchronizes the video data output from the transmission device 410 and the received audio data and outputs the synchronized audio data. A method of synchronizing the video data and the audio data will be described below in detail with reference to FIGs. 17 to 24. Meanwhile, when the server 470 is an eMBMS server, the reception device 430 may identify TMGI information included in the discovery code and access a corresponding channel of the eMBMS server so as to download the audio data required to be synchronized.

FIG. 15 illustrates another example of the method by which the reception device receives audio data required to be synchronized according to an embodiment of the present disclosure. First, in the embodiment of the present disclosure described based on FIG. 5 or 6, the reception device 430 may acquire a content ID through the discovery process. Further, the reception device 430 includes an internal memory, and the memory stores a mapping DataBase (DB) 1510 between the content ID and broadcasting information. The broadcasting information may be, for example, a URL or broadcasting channel information (TMGI) of the eMBMS. The mapping DB 1510 may be basically managed by the reception device 430, or may be received from an application server 1550, periodically or when an application 1530 is driven. The mapping DB 1510 may include only information on video data that can be provided within an area near the reception device 430.

Referring to FIG. 15, the reception device 430 searches the internal mapping DB 1510 to identify whether there is URL information or TMGI information that matches the content ID received from the transmission device 410. When there is URL information or TMGI information that matches the content ID in the mapping DB 1510, the reception device 430 manually or automatically accesses the URL or searches for an eMBMS broadcasting channel corresponding to the TMGI. On the other hand, when there is no URL information or TMGI information that matches the content ID in the mapping DB 1510, the reception device 430 performs at least one of the following two operations. First, the reception device 430 transmits the received content ID to the application server 1550, as indicated by reference numeral 1501. The application server 1550 manages both the content ID and the URL information or TMGI information. Accordingly, the application server 1550 may transmit the URL information or TMGI information mapped to the content ID to the reception device 1510, as indicated by reference numeral 1503. Second, when the area in which the reception device 430 is currently located is different from the occupied area, the reception device 430 makes a request for updating the mapping DB to the application server 1550. At this time, the request may contain location information of the reception device 430. The application server 1550 transmits corresponding mapping DB information to the reception device 430 based on the received location information of the reception device 430. Thereafter, the reception device 430 may acquire audio data by accessing URL information acquired in the same way as that in steps 1409 and 1411 of FIG. 14 or by accessing the broadcasting channel corresponding to the TMGI information.

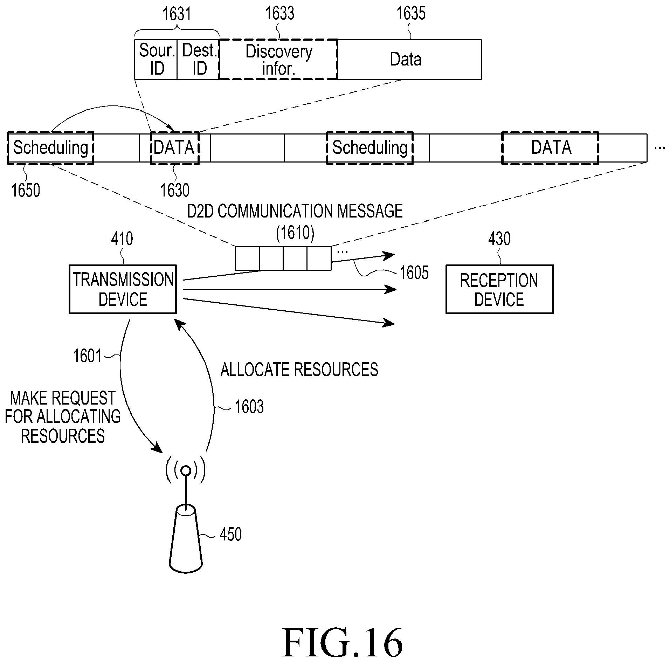

The method by which the transmission device 410 and the reception device 430 transmit/receive audio data after performing the discovery process through the server 470 has been described above with reference to FIGs. 5 to 15, and a method by which the transmission device 410 and the reception device 430 transmit/receive audio data after directly performing the discovery process without passing through the server 470 will be described below with reference to FIG. 16.

FIG. 16 illustrates another example of the method by which the transmission device transmits video-related data in the wireless communication system according to an embodiment of the present disclosure. In the method by which the transmission device 410 and the reception device 430 according to an embodiment of the present disclosure transmit/receive audio data required to be synchronized, the audio data required to be synchronized is transmitted/received through direct communication between the transmission device 410 and the reception device 430 without the discovery process described based on FIG. 5 or 6.

Referring to FIG. 16, in order to transmit audio data required to be synchronized, the transmission device 410 transmits a resource allocation request message for D2D communication to the eNB 450, as indicated by reference numeral 1601. The method by which the transmission device 410 makes a request for allocating resources to the eNB 450 through the resource allocation request message and receives the resources may be the same as the method of making the request for allocating resources described with reference to FIGs. 9 to 13.

Thereafter, when the transmission device 410 receives resources from the eNB 450, as indicated by reference numeral 1603, the transmission device 410 configures a communication message 1610 for D2D communication and transmits the communication message 1610 to the reception device 430, as indicated by reference numeral 1605. In the communication message 1610 configured by the transmission device 410, a header field and data are included in resources of a data region 1630. The data field may include audio data 1635 required to be synchronized and discovery information 1633 of the audio data that is required to be synchronized. The header includes a source ID and a destination ID as information 1631 on the audio data required to be synchronized. For example, the transmission device 410 first configures a source ID and a destination ID in resources of a data region 1630. Further, the transmission device 410 inserts the audio data 1635 required to be synchronized into the resources of the data region 1630. In the embodiment of the present disclosure, the discovery information 1633 of the audio data required to be synchronized is inserted into the part of the data field including the audio data required to be synchronized. That is, transmission information 1633 of the audio data required to be synchronized, proposed by the embodiment of the present disclosure, is inserted into the front part of the data field.

In the embodiment of transmitting/receiving audio data required to be synchronized through only D2D communication without the discovery process between UEs, the reception device 430 operates as follows.

The reception device 430 monitors a scheduling region 1650 in the communication message 1610 in order to receive audio data required to be synchronized through D2D communication. That is, the reception device 430 receives and decodes the source ID, the destination ID, and discovery information (that is, a discovery code) in all data regions indicated by the scheduling region 1650. Through the reception and decoding operation, the reception device 430 may acquire the discovery code for the audio data required to be synchronized, which can be currently received. Then, the reception device 430 outputs audio data-related information corresponding to the discovery code on the UI screen, as illustrated in FIG. 8. In the embodiment of the present disclosure, when the number of transmission devices transmitting audio data is plural, the reception device 430 sequentially receives a plurality of scheduling regions and data regions. Accordingly, the reception device 430 may output audio data-related information, transmitted from the plurality of transmission devices, which is decoded through a source ID field, a destination ID field, and a discovery information field of each data region, on the UI screen. Further, when the reception device 430 receives an event for selecting information on the audio data which the user desires through the UI screen, the reception device 430 decodes the audio data included in the data field in the data region of the corresponding scheduling region and outputs the decoded audio data through an audio output terminal such as a speaker.

The method by which the transmission device 410 and the reception device 430 according to an embodiment of the present disclosure transmit/receive audio data has been described above, and methods of synchronizing video data output from the transmission device 410 and audio data output from the reception device 430 will be described below with reference to FIGs. 17 to 24.

FIG. 17 illustrates an example of the method of synchronizing data transmitted/received from the transmission device and the reception device according to an embodiment of the present disclosure.

Referring to FIG. 17, the transmission device 410 is the entity that outputs video data and the reception device 430 is the entity that output audio data required to be synchronized with the video data. Data managed by the transmission device 410 includes information on an output start time point (T) at which the output of the video data starts through the video output unit and an output start time point (T') at which the audio data is output. The output start time point (T) of the video data and the output start time point (T') of the audio data correspond to time points of the absolute time (for example, the same time between the transmission device 410 and the reception device 430).

In data transmission or reception, the transmission device 410 or the reception device 430 may compare the output start time point (T') of audio data 1730 with the output start time point (T) of video data 1710 and particular threshold values ($\Delta t1$ and $\Delta t2$), and the reception device 430 may output or delete audio data required to be synchronized based on the result. According to an embodiment of the present disclosure, the particular threshold values ($\Delta t1$ and $\Delta t2$) may be set as a minimum guaranteed time and a maximum guaranteed time for starting the output of the audio data based on the output start time point of the video data. For example, the reception device 430 may start the output of the audio data when the relationship shown in Equation (1) below is established.

Equation (1)
$$T - \Delta t1 \leq T' \leq T + \Delta t2$$

In Equation (1), T' denotes the output start time point of audio data, T denotes the output start time point of video data, $\Delta t1$ denotes the minimum guaranteed time between the output start time point of the video data and the output start time point of the audio data, and $\Delta t2$ denotes the maximum guaranteed time between the output start time point of the video data and the output start time point of the audio data. The particular threshold values $\Delta t1$ and $\Delta t2$ may be preset in the transmission device 410 and the reception device 430, or may be received through the server 470.

The transmission device 410 may transmit time information to the reception device 430, and the time information may include at least one of the output start time point (T) of the video data, a margin value between the output start time point of the video data and a time point at which the transmission device 410 transmits audio data to the reception device 430, and processing time of the transmission device 410 (that is, discovery and resource allocation time). Further, the transmission device 410 may transmit or delete the audio data required to be synchronized based on the time information.

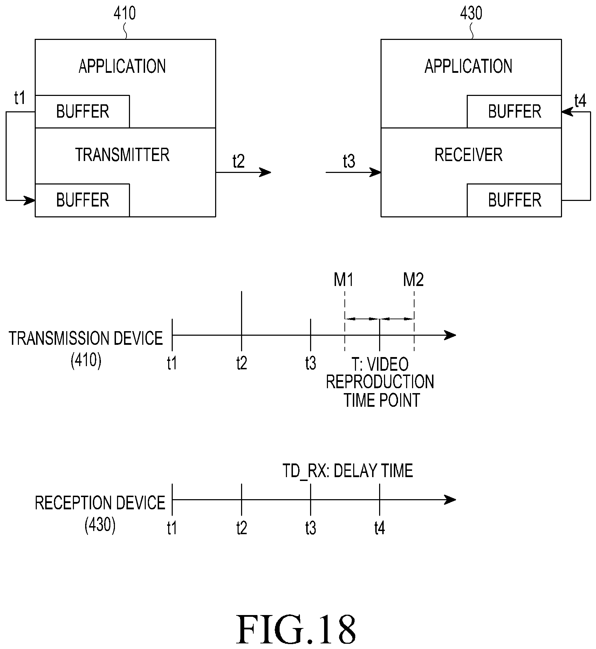

The method of synchronizing data transmitted/received between the transmission device 410 and the reception device 430 has been briefly described above with reference to FIG. 17, and an example of application of the method of performing the synchronization described in FIG. 17 to an actual communication system will be described below with reference to FIGs. 18 to 20.

FIG. 18 illustrates an example of applying a data synchronization method in the transmission device and the reception device according to an embodiment of the present disclosure.

First, audio data required to be synchronized is stored in the buffer of an application of the transmission device 410. The time at which audio data that is required to be synchronized and is to be transmitted is delivered from the buffer of the application to the buffer of a transmitter is defined as t1 and the time at which resources for transmitting the audio data that is required to be synchronized and is delivered to the buffer of the transmitter are allocated is defined as t2. The transmission device 410 may be aware of the output start time point (T) of the video data before starting the output of the video data.

The transmission device 410 may select the output start time point (T) of the video data or at least one of a maximum guaranteed time (M2) and a minimum guaranteed time (M1) for guaranteeing a minimum output start time for synchronization between the output start time point (T) of the video data and the output start time point (T') of the audio data and be made aware of a time margin value (Tm) for the synchronization based on the allocation time (t2) of resources to be transmitted for the audio data to be transmitted. Further, the transmission device 410 may determine whether to transmit the audio data that is required to be synchronized to the reception device 430 based on the output start time point (T) of the video data and the allocation time (t2) of resources to be transmitted.

The reception device 430 defines a time at which audio data is received by the receiver from the transmission device 410 as t3 and defines a time before the received audio data is transmitted to the application of the reception device 430 and then is output as t4.

The reception device 430 may identify an output delay time (Td_rx) of the reception device 430 based on the time (t4) before the application starts the output of audio data required to be synchronized and the time (t3) at which the receiver receives the audio data. Further, the reception device 430 may determine whether the audio data required to be synchronized is output based on the output delay time (Td rx) of the reception device 430 or the margin value Tm of the transmission device 410.

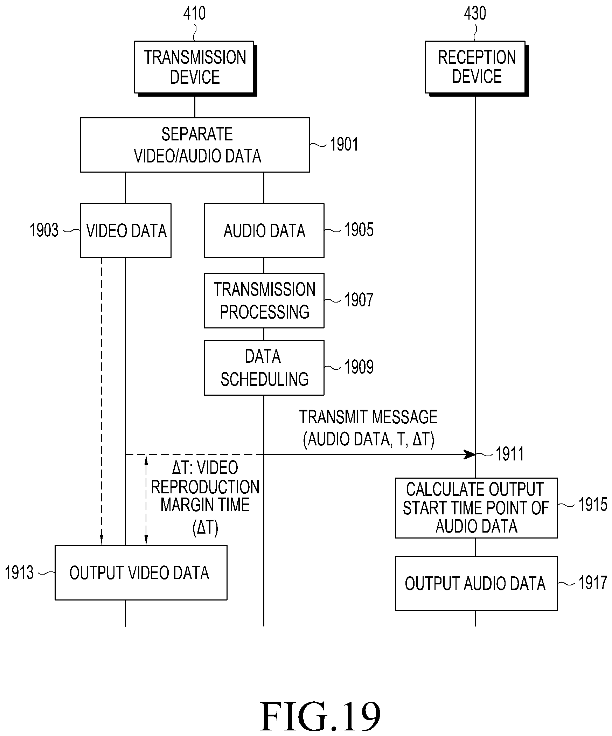

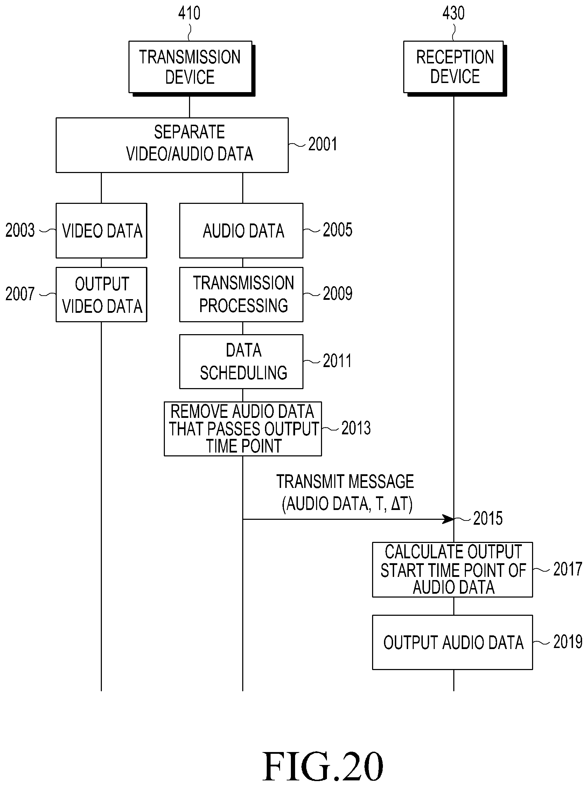

Hereinafter, a method by which the transmission device and the reception device according to an embodiment of the present disclosure synchronize and output data will be described with reference to FIGs. 19 and 20.

Fig. 19 illustrates an example of the method by which the transmission device and the reception device according to an embodiment of the present disclosure synchronize and output data. The embodiment of FIG. 19 relates to a method by which the transmission device 410 transmits, in advance, audio data required to be synchronized to the reception device 430 and performs synchronization before reproducing video data.

Referring to FIG. 19, when the transmission device 410 includes a video file (that is, video container data) for reproducing video data and audio data, the transmission device 410 separates the video file into the video data and the audio data as indicated by reference numeral 1901. For example, when the video file corresponds to Audio Video Interleaved (AVI) data, through the process of separating video data and audio data in the AVI data, the AVI data may be video x264 and the audio data may be audio Digital Theater Systems (DTS).

The transmission device 410 manages each of the video data and the audio data that have been separated from each other in steps 1903 and 1905. Further, the transmission device 410 may output the video data while delaying the output start time point of the separated video data by a delay time in step 1913. In addition, the transmission device 410 performs transmission processing and data scheduling for transmission of the audio data in steps 1907 and 1909. Since the transmission processing operation and the data scheduling operation correspond to the discovery operation and the resource allocation operation described with reference to FIGs. 5 to 16, a detailed description thereof will be omitted.

When the performance of transmission processing and scheduling request is completed, the transmission device 410 transmits a message containing the separated audio data to the reception device 430 in step 1911. At this time, the transmission device 410 may transmit the message containing at least one of the output start time point (T) of the video data and the video output margin time (Δt) to the reception device 430. The video output margin time (Δt) refers to a margin time for the output of the video data from the time point at which the message is transmitted to the output start time point of the video data.

The delay time when the output of the video data is delayed may be determined in consideration of at least one of transmission processing 1907 or data scheduling 1909 performed in the transmission device. For example, when the output of the video data is delayed, the delay time of the video data may be calculated using the time (for example, scheduling time information in the mobile communication system, a connection time in the case of Wi-Fi, and a pairing time in the case of Bluetooth) for the transmission processing operation and/or the resource allocation operation of the transmission device 410 or processing time information of the reception device 430 pre-registered or received from reception device 430.

13

The reception device 430 receives the message containing the audio data from the transmission device 410 and calculates the output start time point (T') of the audio data based on time information related to the output of the video data contained in the message (the output start time point (T) of the video data or the video output margin time (Δt)) in step 1915. Further, the reception device 430 may output the audio data contained in the message at the calculated output start time point (T') of the audio data. At this time, when the calculated output start time point (T') of the audio data is not included within the range of Equation (1), the reception device 430 may remove the audio data.

FIG. 20 illustrates another example of the method by which the transmission device and the reception device output data according to an embodiment of the present disclosure. The embodiment of FIG. 20 relates to a method by which the transmission device 410 simultaneously transmits video data and audio data that are required to be synchronized.

Referring to FIG. 20, when the transmission device 410 has a video file for reproducing video data and audio data, the transmission device 410 separates the video file into the video data and the audio data in step 2001.

The transmission device 410 manages each of the video data and the audio data which have been separated from each other in steps 2003 and 2005. Further, the transmission device 410 outputs the separated video data in step 2007.

In addition, the transmission device 410 performs transmission processing and data scheduling for transmission of the audio data in steps 2009 and 2011. Since the transmission processing operation and the data scheduling operation correspond to the discovery operation and the resource allocation operation described with reference to FIGs. 5 to 16, a detailed description thereof will be omitted.

From the separated video data, the transmission device 410 identifies the output start time point (T) of the video data in the transmission device 410 or the image output margin time (Δt) corresponding to the remaining time until the output start time point (T) of the video data. The image output margin time (Δt) may be calculated based on the difference between the time point at which the transmission device 410 transmits audio data required to be synchronized to the reception device 430 and the output start time point (T) of the video data in the transmission device 410. The output start time point of the video data corresponds to a time point of the absolute time.

The transmission device 410 may compare the time at which the audio data required to be synchronized can be transmitted with the image output start time point (T) or the image output margin time (Δt), and, when the video output start time point (T) or the video output margin time (Δt) has passed, may remove the audio data without transmitting the audio data in step 2013.

When the video output start time point (T) or the video output margin time (Δt) has not passed, the transmission device 410 transmits the message containing the audio data to the reception device 430. At this time, the message may contain at least one of the audio data required to be synchronized, the video output start time point (T), and the video reproduction margin time (Δt). The reception device 430 receives the message from the transmission device 410 and calculates the output start time point of the audio data based on time information related to the output of the video data (the video output start time point (T) or the video output margin time (Δt) contained in the received message in step 2017. Further, the reception device 430 outputs the audio data contained in the message at the calculated output start time point of the audio data in step 2019.

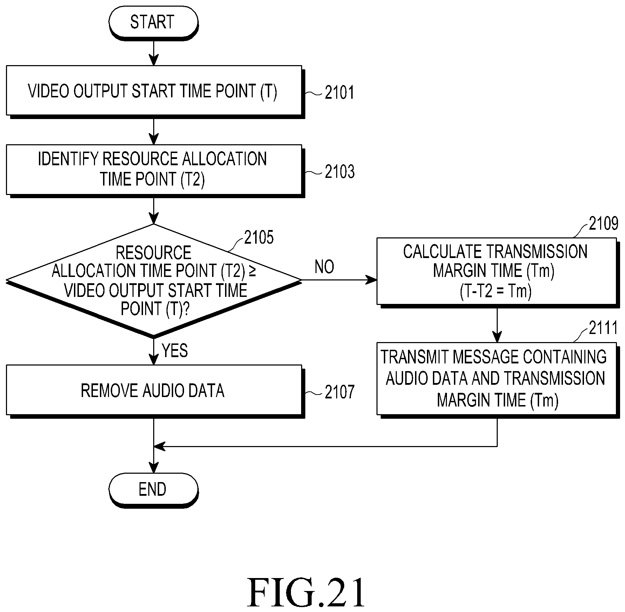

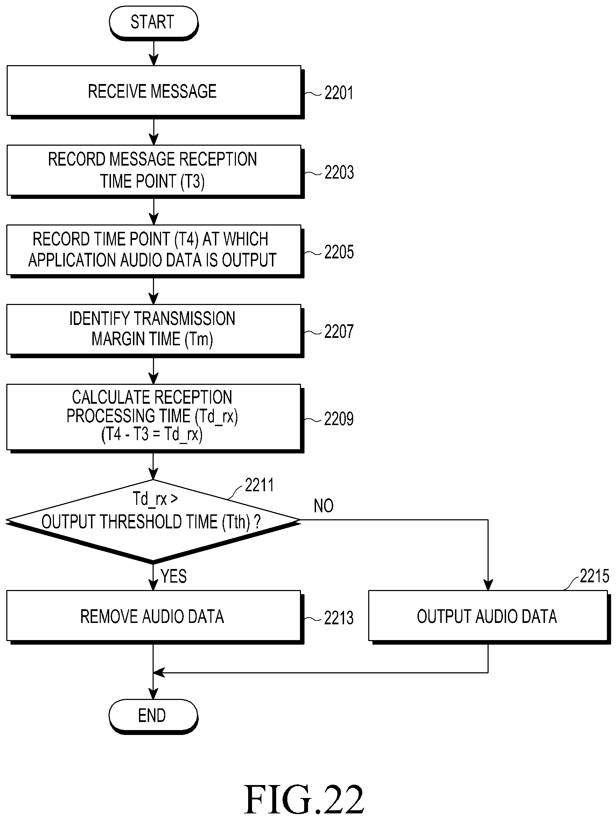

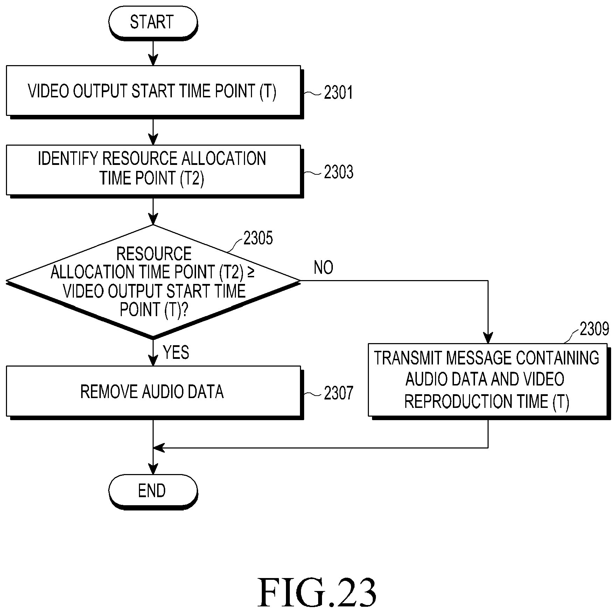

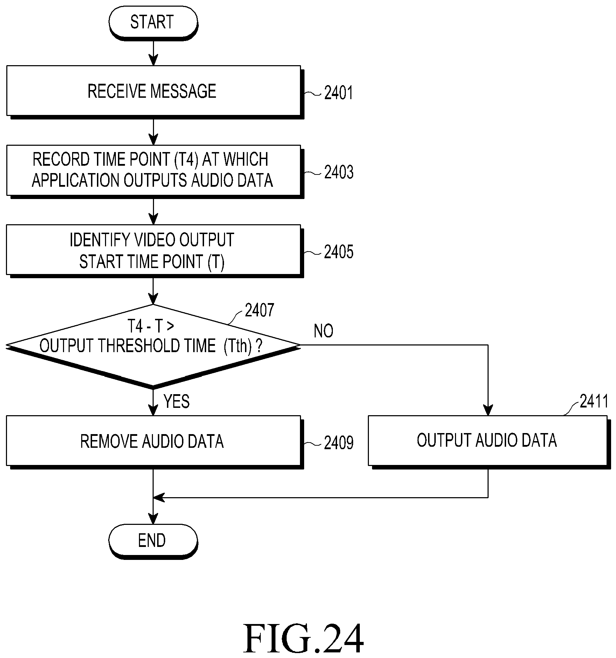

The methods by which the transmission device 410 and the reception device 430 according to an embodiment of the present disclosure synchronize and output data have been described above with reference to FIGs. 19 and 20. Hereinafter, a method of synchronizing data when the absolute time between the transmission device 410 and the reception device 430 is not synchronized will be described with reference to FIGs. 21 and 22, and a method of synchronizing data when the absolute time between the transmission device 410 and the reception device 430 is synchronized will be described with reference to FIGs. 23 and 24.

FIG. 21 illustrates an example of a method of transmitting audio data when the absolute time between the transmission device 410 and the reception device 430 is not synchronized according to an embodiment of the present disclosure.

Referring to FIG. 21, the transmission device 410 identifies the video output start time point (T) at which the output of video data starts in step 2101. Further, the transmission device 410 identifies a resource allocation time point (T2) at which radio resources for transmitting audio data are allocated in step 2103. The transmission device 410 identifies whether the video output start time point (T) of the transmission device 410 is earlier than the resource allocation time point (T2) at which radio resources for transmitting audio data area allocated in step 2105. When the video reproduction start time point (T) is earlier than the resource allocation time point (T2) (for example, when the video reproduction start time point (T) passes the resource allocation time point (T2)), the transmission device 410 removes the audio data (that is, does not transmit the audio data to the reception device 430) in step 2107. However, when the video output start time point (T) is the same as or later than the resource allocation time point (T2), the transmission device 410 calculates a transmission margin time (Tm) based on the difference between the video output start time point (T) and the resource allocation time point (T2) in step 2109.

Thereafter, the transmission device 410 transmits a message containing the corresponding audio data and the calculated transmission margin time to the reception device 430 in step 2111.

FIG. 22 illustrates an example of a method by which the reception device outputs audio data when the absolute time between the transmission device 410 and the reception device 430 is not synchronized according to an embodiment of the present disclosure.

Referring to FIG. 22, the reception device 430 receives a message transmitted from the transmission device 410 in step 2201 and records a message reception time point (T3) at which the message is received in step 2203. Further, the reception device 430 decodes the received message and records a time point (T4) at which an application starts the output of the corresponding audio data in step 2205. In addition, the reception device 430 identifies a transmission margin time (Tm) contained in the received message in step 2207.

Thereafter, the reception device 430 calculates a reception processing time (Td_rx) based on the message reception time point (T3) at which the message is received from the transmission device 410 and the output start time point (T4) at which the application outputs the corresponding audio data in step 2209.

Further, the reception device 430 identifies whether the reception processing time (Td rx) is longer than an output threshold time (Tth) in step 2211. At this time, when the transmission margin time (Tm) is generated to be a minimum output value (M1), the output threshold time (Tth) may be determined using the transmission margin time (Tm) and a maximum output value (M2). Further, the output time point may be controlled by compensating the reception processing time (Td_rx) based on the transmission margin time (Tm). When the transmission margin time (Tm) is generated to be the maximum output value (M2), the transmission margin time (Tm) may be determined as the output threshold time (Tth).

When the reception processing time (Td_rx) is longer than the output threshold time (Tth), the reception device 430 removes the corresponding audio data (that is, does not output the audio data) in step 2213. On the other hand, when the reception processing time (Td rx) is equal to or shorter than the output threshold time (Tth), the reception device 430 outputs the audio data at the time point (T4) at which the application reproduces the corresponding audio data in step 2215.

FIG. 23 illustrates another example of the method by which the transmission device transmits audio data when the absolute time between the transmission device 410 and the reception device 430 is synchronized according to an embodiment of the present disclosure.

Referring to FIG. 23, the transmission device 410 identifies the image output start time point (T) at which the output of video data starts in step 2301. Further, the transmission device 410 identifies a resource allocation time point (T2) at which radio resources for transmitting audio data are allocated in step 2303.

The transmission device 410 identifies whether the video output start time point (T) of the transmission device 410 is earlier than the resource allocation time point (T2) at which radio resources for transmitting audio data are allocated in step 2305. When the video output start time point (T) is earlier than the resource allocation time point (T2) (for example, when the video output start time point (T) passes the resource allocation time point (T2)), the transmission device 410 removes the audio data (that is, does not transmit the audio data to the reception device 430) in step 2307. On the other hand, when the video output start time point (T) is equal to or later than the resource allocation time point (T2), the transmission device 410 transmits a message containing the audio data to the reception device 430 at the video output start time point (T) in step 2309.

FIG. 24 illustrates another example of the method by which the reception device outputs audio data when the absolute time between the transmission device 410 and the reception device 430 is synchronized according to an embodiment of the present disclosure.

Referring to FIG. 24, the reception device 430 receives a message transmitted from the transmission device 410 in step 2401, and decodes the received data and records the time point (T4) at which the application starts the output of the corresponding audio data in step 2403. Further, the reception device 430 identifies the video output start time point (T) of video data reproduced in the transmission device through the received message in step 2405.

In addition, the reception device 430 identifies whether a difference value between the video reproduction start time point (T) at which video data is reproduced in the transmission device 410 and the time point (T4) at which the application of the reception device 430 reproduces the corresponding audio data is greater than a particular threshold value (Tth) in step 2407. The particular threshold value (Tth) may be preset in the reception device 430 or may be received from the server.

When the difference value between the video output start time point (T) at which the video data is output and the time point (T4) at which the application of the reception device 430 outputs the corresponding audio data is greater than the particular threshold value (Tth), the reception device 430 removes the audio data without outputting the audio data in step 2409. On the other hand, when the difference value between the video output start time point (T) at which the video data is output and the time point (T4) at which the application of the reception device 430 outputs the corresponding audio data is equal to or smaller than the particular threshold value (Tth), the reception device 430 outputs the audio data at the time point (T4) at which the application outputs the corresponding audio data in step 2411.

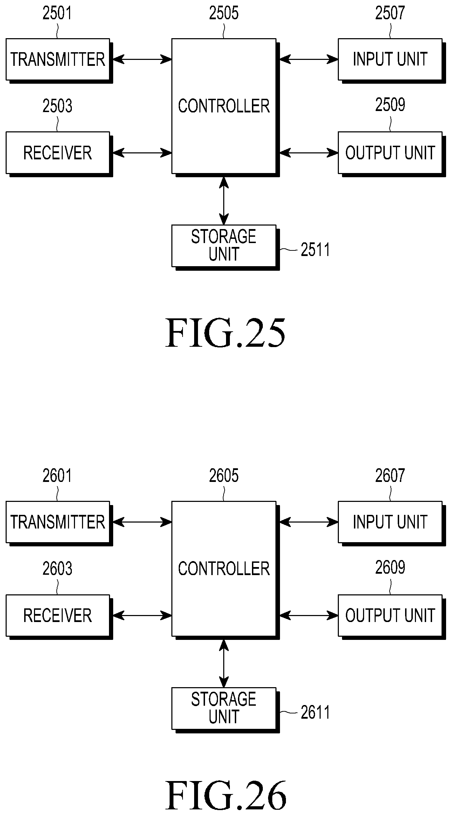

The method by which the transmission device 430 and the reception device 410 according to an embodiment of the present disclosure output video data and audio data required to be synchronized with the video data has been described above, and the internal structures of the transmission device 430 and the reception device 410 for outputting video data and audio data required to be synchronized with the video data will be described below with reference to FIGs. 25 and 26.

FIG. 25 schematically illustrates an example of an internal structure of the transmission device that transmits data in the communication system according to an embodiment of the present disclosure.

Referring to FIG. 25, the transmission device 410 includes a transmitter 2501, a receiver 2503, a controller 2505, an input unit 2507, an output unit 2509, and a storage unit 2511.

First, the controller 2505 controls the general operation of the transmission device 410, and in particular controls operations related to a data transmission operation performed in the communication system according to an embodiment of the present disclosure. Since the operations related to the data transmission operation performed in the communication system according to an embodiment of the present disclosure are the same as those described in connection with FIGs. 4 to 24, a detailed description thereof will be omitted herein.

The transmitter 2501 transmits various signals and various messages to other entities included in the communication system, for example, a broadcasting device, a wireless node, a gateway, and a server, under the control of the controller 2505. Since the various signals and the various messages transmitted by the transmitter 2501 are the same as those described in connection with FIGs. 4 to 24, a detailed description thereof will be omitted herein.

Further, the receiver 2503 receives various signals and various messages from other entities included in the communication system, for example, a broadcasting device, a wireless node, a gateway, and a server, under the control of the controller 2505. Since the various signals and the various messages received by the receiver 2503 are the same as those described in connection with FIGs. 4 to 24, a detailed description thereof will be omitted herein.

The storage unit 2511 stores a program and data on the operations related to the data transmission operation performed in the communication system according to an embodiment of the present disclosure under the control of the controller 2505. Further, the storage unit 2511 stores various signals and various message received from the other entities by the receiver 2503.

The input unit 2507 and the output unit 2509 input and output various signals and various messages related to the operation associated with the data transmission operation performed by the transmission device 410 in the communication system according to an embodiment of the present disclosure under the control of the controller 2505. Further, the output unit 2509 includes a video output unit that outputs video data.

Meanwhile, although FIG. 25 illustrates that the transmitter 2501, the receiver 2503, the controller 2505, the input unit 2507, the output unit 2509, and the storage unit 2511 are implemented as separate units, at least two of the transmitter 2501, the receiver 2503, the controller 2505, the input unit 2507, the output unit 2509, and the storage unit 2511 may be integrated in the transmission device 410. Further, the transmission device 410 may be implemented as a single processor.

FIG. 26 schematically illustrates an example of an internal structure of the reception device that receives data in the communication system according to an embodiment of the present disclosure.

Referring to FIG. 26, the reception device 430 includes a transmitter 2601, a receiver 2603, a controller 2605, an input unit 2607, an output unit 2609, and a storage unit 2611.

First, the controller 2605 controls the general operation of the reception device 430, and in particular controls operations related to a data reception operation performed in the communication system according to an embodiment of the present disclosure. Since the operations related to the data reception operation performed in the communication system according to an embodiment of the present disclosure are the same as those described in connection with FIGs. 4 to 24, a detailed description thereof will be omitted herein.

The transmitter 2601 transmits various signals and various messages to other entities included in the communication system, for example, a broadcasting device, a wireless node, a gateway, and a server, under the control of the controller 2605. Since the various signals and the various messages transmitted by the transmitter 2601 are the same as those described in connection with FIGs. 4 to 24, a detailed description thereof will be omitted herein.

Further, the receiver 2603 receives various signals and various messages from other entities included in the communication system, for example, a broadcasting device, a wireless node, a gateway, and a server, under the control of the controller 2605. Since the various signals and the various messages received by the receiver 2603 are the same as those described in connection with FIGs. 4 to 24, a detailed description thereof will be omitted herein.

The storage unit 2611 stores a program and data on operations related to the data reception operation performed in the communication system according to an embodiment of the present disclosure under the control of the controller 2605. Further, the storage unit 2611 stores various signals and various message received from other entities by the receiver 2603.

The input unit 2607 and the output unit 2609 input and output various signals and various messages related to operations associated with the data transmission operation performed by the reception device 430 in the communication system according to an embodiment of the present disclosure under the control of the controller 2505. Further, the output unit 2609 includes at least one of a video output unit for outputting video data and an audio output unit for outputting audio data.

Meanwhile, although FIG. 26 illustrates that the transmitter 2601, the receiver 2603, the controller 2605, the input unit 2607, the output unit 2609, and the storage unit 2611 are implemented as separate units, at least two of the transmitter 2601, the receiver 2603, the controller 2605, the input unit 2607, the output unit 2609, and the storage unit 2611 may be integrated in the reception device 430. Further, the reception device 430 may be implemented as a single processor.

Although the embodiment has been described in the detailed description of the present disclosure, the present disclosure may be modified in various forms without departing from the scope of the present disclosure. Thus, the scope of the present disclosure shall not be determined merely based on the described exemplary embodiments and rather determined based on the accompanying claims.

**Claims**

1.  A method of transmitting data by a transmission device (410) in a wireless communication system supporting device-to-device communication, the method comprising:

    separating video data and video-related data simultaneously output with the video data in one video container data;
    transmitting, to a server (470), a discovery code request message requesting for a discovery code for providing information on the video container data;
    transmitting, to an evolved NodeB, eNB (450), a resource allocation request message requesting for allocating resources for transmission of the video-related data; generating a device-to-device communication message containing the video-related data, a source ID used by a radio transmission layer of the transmission device (410), and information on a time point at which the video data is output;
    transmitting the generated device-to-device communication message to a reception device (430) using the resources; and
    outputting the video data,
    wherein the source ID is included into the discovery code.

2.  The method of claim 1, further comprising:

    receiving the discovery code from the server (470); and
    broadcasting the received discovery code.

3.  The method of claim 1, wherein the discovery code request message contains at least one of an application ID for identifying an application, a transmission device ID for identifying the transmission device (410), and a content ID for identifying the video-related data, and a unique ID of the transmission device (410).

4.  The method of claim 3, further comprising:

    receiving a resource allocation response message containing information on the allocated resources,
    wherein the transmitting of the generated device-to-device communication message to the reception device (430) comprises transmitting the generated device-to-device communication message to the reception device (430) while the generated device-to-device communication message is inserted into the allocated resources from the eNB (450).

5.  The method of claim 1, wherein the outputting of the video data comprises:

    determining the time point at which the video data is output; and
    outputting the video data at the determined time point.

6.  The method of claim 1, wherein the transmitting of the generated device-to-device communication message to the reception device (430) comprises:

    identifying the time point at which the video data is output;
    identifying a resource allocation time point at which resources for transmission of the video-related data are allocated;

when the resource allocation time point is equal to or later than the time point at which the video data is output, removing the video-related data;

when the resource allocation time point is earlier than the time point at which the video data is output, calculating a margin time from a difference between the time point at which the video data is output and the resource allocation time point; and

transmitting a message containing the video-related data and the margin time to the reception device (430).

7. The method of claim 1, wherein the transmitting of the generated device-to-device communication message to the reception device (430) comprises:

identifying the time point at which the video data is output;

identifying a resource allocation time point at which resources for transmission of the video-related data are allocated;

when the resource allocation time point is equal to or later than the time point at which the video data is output, removing the video-related data; and

when the resource allocation time point is earlier than the time point at which the video data is output, transmitting the generated device-to-device communication message to the reception device (430).

8. A method of receiving data by a reception device (430) in a wireless communication system supporting device-to-device communication, the method comprising:

receiving, from a transmission device (410), a discovery code for being provided information on one video container data;

receiving, from the transmission device (410), a device-to-device communication message containing video-related data, a source ID used by a radio transmission layer of the transmission device (410), and information on a time point at which video data is output using allocated resources from an evolved NodeB, eNB (450); and

outputting the video-related data based on the information on the time point at which the video data is output, wherein the video-related data is simultaneously output with the video data, the video-related data being separated from the video data in the video container data,

wherein the source ID is included into the discovery code,

wherein the allocated resources is allocated according to a resource allocation request message requesting for allocating resources for transmission of the video-related data.

9. The method of claim 8, further comprising:

transmitting the discovery code to a server (470); and

receiving discovery code information mapped to the discovery code from the server (470).

10. The method of claim 8, wherein the discovery code information contains at least one of an application ID for identifying an application, a transmission device ID for identifying the transmission device (410), and a content ID for identifying the video-related data, and a unique ID of the transmission device (410).

11. The method of claim 1 or 8, wherein the information on the time point at which the video is output contains at least one of the time point at which the video is output and a margin time between a time point at which the device-to-device communication message is transmitted and a time point at which the video data is output.

12. The method of claim 8, wherein the outputting of the video-related data comprises:

identifying a first time point at which the data is received;

identifying a second time point at which the video-related data is output by an application;

identifying a margin time between the time point at which the device-to-device communication message is transmitted and a time point at which the video data is output;

calculating a reception processing time based on a difference between the second time point and the first time point;

when the reception processing time is longer than a predetermined threshold time, removing the video-related data; and

when the reception processing time is equal to or shorter than the predetermined threshold time, outputting the video-related data.

**13.** The method of claim 8, wherein the outputting of the video-related data comprises:

identifying a first time point at which an application outputs the video-related data;
identifying a second time point at which the video-related data is output by an application;
when a difference between the first time point and the second time point is greater than a predetermined threshold value, removing the video-related data; and
when the difference between the first time point and the second time point is equal to or smaller than the predetermined threshold value, outputting the video-related data.

**14.** The method of claim 8, wherein the video-related data includes at least one of audio data, text data, and video data.

**15.** An apparatus configured to perform the method of one of claims 1 to 14.


**Patentansprüche**

**1.** Verfahren zum Übertragen von Daten durch ein Übertragungsgerät (410) in einem drahtlosen Kommunikationssystem, das die Gerät-zu-Gerät-Kommunikation unterstützt, wobei das Verfahren Folgendes umfasst:

Trennen von Videodaten und videobezogenen Daten, die gleichzeitig mit den Videodaten in einer Videodatendatei ausgegeben werden;
Übertragen einer Zugangscode-Anforderungsnachricht, die einen Zugangscode zum Bereitstellen von Informationen über die Videodatendatei anfordert, an einen Server (470);
Übertragen einer Ressourcenzuweisungs-Anforderungsnachricht, die die Zuweisung von Ressourcen zur Übertragung der videobezogenen Daten anfordert, an einen Evolved NodeB, eNB (450);
Erzeugen einer Gerät-zu-Gerät-Kommunikationsnachricht, die die videobezogenen Daten, eine Quellen-ID, die von einer Funkübertragungsschicht des Übertragungsgeräts (410) verwendet wird und Informationen zu einem Zeitpunkt zu dem die Videodaten ausgegeben werden, enthält;
Übertragen der erzeugten Gerät-zu-Gerät-Kommunikationsnachricht an ein Empfangsgerät (430) unter Verwendung der Ressourcen; und
Ausgabe der Videodaten,
wobei die Quellen-ID in dem Zugangscode enthalten ist.

**2.** Verfahren nach Anspruch 1, ferner umfassend:

Empfangen des Zugangscodes vom Server (470); und
Senden des empfangenen Zugangscodes.

**3.** Verfahren nach Anspruch 1, wobei die Zugangscode-Anforderungsnachricht mindestens eine von Folgenden enthält: eine Anwendungs-ID zum Identifizieren einer Anwendung, eine Übertragungsgeräte-ID zum Identifizieren des Übertragungsgeräts (410) und eine Inhalts-ID zum Identifizieren der videobezogenen Daten und eine eindeutige ID des Übertragungsgerätes (410).

**4.** Verfahren nach Anspruch 3, das des Weiteren Folgendes umfasst:

Empfangen einer Ressourcenzuweisungs-Antwortnachricht, die Informationen zu den zugewiesenen Ressourcen enthält,
wobei das Senden der erzeugten Gerät-zu-Gerät-Kommunikationsnachricht an ein Empfangsgerät (430) das Senden der erzeugten Gerät-zu-Gerät-Kommunikationsnachricht an das Empfangsgerät (430) umfasst, während die erzeugte Gerät-zu-Gerät-Kommunikationsnachricht in die zugewiesenen Ressourcen von dem eNB (450) eingefügt wird.

**5.** Verfahren nach Anspruch 1, bei dem die Ausgabe der Videodaten Folgendes umfasst:

Bestimmen des Zeitpunkts, zu dem die Videodaten ausgegeben werden; und
Ausgeben der Videodaten zum festgelegten Zeitpunkt.

6.  Verfahren nach Anspruch 1, wobei das Senden der erzeugten Gerät-zu-Gerät-Kommunikationsnachricht an das Empfangsgerät (430) Folgendes umfasst:

Identifizieren des Zeitpunkts, zu dem die Videodaten ausgegeben werden;
Identifizieren eines Ressourcenzuweisungszeitpunkts, zu dem Ressourcen zur Übertragung der videobezogenen Daten zugewiesen werden;
wenn der Ressourcenzuweisungszeitpunkt später oder gleich dem Zeitpunkt ist, zu dem die Videodaten ausgegeben werden, Entfernen der videobezogenen Daten;
wenn der Ressourcenzuweisungszeitpunkt früher oder gleich dem Zeitpunkt ist, zu dem die Videodaten ausgegeben werden, Berechnen eines Zeitabstands aus einer Differenz zwischen dem Zeitpunkt, zu dem die Videodaten ausgegeben werden, und dem Ressourcenzuweisungszeitpunkt; und
Senden einer Nachricht, die die videobezogenen Daten und den Zeitabstand enthält, an das Empfangsgerät (430).

7.  Verfahren nach Anspruch 1, wobei das Senden der erzeugten Gerät-zu-Gerät-Kommunikationsnachricht an das Empfangsgerät (430) Folgendes umfasst:

Identifizieren des Zeitpunkts, zu dem die Videodaten ausgegeben werden;
Identifizieren eines Ressourcenzuweisungszeitpunkts, zu dem Ressourcen zur Übertragung der videobezogenen Daten zugewiesen werden;
wenn der Ressourcenzuweisungszeitpunkt später oder gleich dem Zeitpunkt ist, zu dem die Videodaten ausgegeben werden, Entfernen der videobezogenen Daten; und
wenn der Ressourcenzuweisungszeitpunkt früher oder gleich dem Zeitpunkt ist, zu dem die Videodaten ausgegeben werden, das Senden der erzeugten Gerät-zu-Gerät-Kommunikationsnachricht an das Empfangsgerät (430).

8.  Verfahren zum Empfangen von Daten durch ein Empfangsgerät (430) in einem drahtlosen Kommunikationssystem, das die Gerät-zu-Gerät-Kommunikation unterstützt, wobei das Verfahren Folgendes umfasst:

Empfangen eines Zugangscodes von einer Sendevorrichtung (410), um Informationen über Daten einer Videodatendatei bereitzustellen;
Empfangen von dem Empfangsgerät (430) einer Gerät-zu-Gerät-Kommunikationsnachricht, die videobezogene Daten, eine Quellen-ID, die von einer Funkübertragungsschicht des Übertragungsgeräts (410) verwendet wird und Informationen zu einem Zeitpunkt zu dem die Videodaten ausgegeben werden, enthält, unter Verwendung von zugewiesenen Ressourcen von einem Evolved NodeB, eNB (450) ; und
Ausgeben der videobezogenen Daten basierend auf den Informationen über den Zeitpunkt, zu dem die Videodaten ausgegeben werden,
wobei die videobezogenen Daten und die Videodaten gleichzeitig ausgegeben werden, wobei die videobezogenen Daten von den Videodaten in der Videodatendatei getrennt sind,
wobei die Quellen-ID in dem Zugangscode enthalten ist,
wobei die zugewiesenen Ressourcen gemäß einer Ressourcenzuweisungs-Anforderungsnachricht zugewiesen werden, die die Zuweisung von Ressourcen zur Übertragung der videobezogenen Daten anfordert.

9.  Verfahren nach Anspruch 8, das des Weiteren Folgendes umfasst:

Übertragen des Zugangscodes an einen Server (470); und
Empfangen von Zugangscodeinformationen, die dem Zugangscode zugeordnet sind, von dem Server (470).

10. Verfahren nach Anspruch 8, wobei die Zugangscodeinformationen mindestens eine von Folgenden enthält: eine Anwendungs-ID zum Identifizieren einer Anwendung, eine Übertragungsgeräte-ID zum Identifizieren des Übertragungsgeräts (410) und eine Inhalts-ID zum Identifizieren der videobezogenen Daten oder eine eindeutige ID des Übertragungsgerätes (410).

11. Verfahren nach Anspruch 1 oder 8, wobei die Informationen über den Zeitpunkt, zu dem das Video ausgegeben wird, mindestens eines von Folgenden enthält: der Zeitpunkt, zu dem das Video ausgegeben wird, oder eine Zeitspanne zwischen einem Zeitpunkt, zu dem die Gerät-zu-Gerät-Kommunikationsnachricht übertragen wird oder ein Zeitpunkt, zu dem die Videodaten ausgegeben werden.

**12.** Verfahren nach Anspruch 8, wobei das Ausgeben der videobezogenen Daten Folgendes umfasst:

Identifizieren eines ersten Zeitpunkts, zu dem die Daten empfangen werden;
Identifizieren eines zweiten Zeitpunkts, zu dem die videobezogenen Daten von einer Anwendung ausgegeben werden;
Identifizieren einer Zeitspanne zwischen dem Zeitpunkt zu dem die Gerät-zu-Gerät-Kommunikationsnachricht übertragen wird und einem Zeitpunkt, zu dem die Videodaten ausgegeben werden;
Berechnen einer Empfangsverarbeitungszeit basierend auf einer Differenz zwischen dem zweiten Zeitpunkt und dem ersten Zeitpunkt;
wenn die Empfangsverarbeitungszeit länger als eine vorbestimmte Schwellenzeit ist, Entfernen der videobezogenen Daten; und
wenn die Empfangsverarbeitungszeit gleich oder kürzer als die vorbestimmte Schwellenzeit ist, Ausgeben der videobezogenen Daten.

**13.** Verfahren nach Anspruch 8, wobei das Ausgeben der videobezogenen Daten Folgendes umfasst:

Identifizieren eines ersten Zeitpunkts, zu dem eine Anwendung die videobezogenen Daten ausgibt;
Identifizieren eines zweiten Zeitpunkts, zu dem die videobezogenen Daten von einer Anwendung ausgegeben werden;
wenn eine Differenz zwischen dem ersten Zeitpunkt und dem zweiten Zeitpunkt größer als ein vorbestimmter Schwellenwert ist, Entfernen der videobezogenen Daten; und
wenn die Differenz zwischen dem ersten Zeitpunkt und dem zweiten Zeitpunkt gleich oder kleiner als der vorbestimmte Schwellenwert ist, Ausgeben der videobezogenen Daten.

**14.** Verfahren nach Anspruch 8, wobei die videobezogenen Daten Audiodaten, Textdaten und / oder Videodaten umfassen.

**15.** Gerät zur Durchführung des Verfahrens nach einem der Ansprüche 1 bis 14.

## Revendications

**1.** Procédé de transmission de données par un dispositif de transmission (410) dans un système de communication sans fil prenant en charge une communication de dispositif à dispositif, le procédé comprenant :

séparer des données vidéo et des données associées à une vidéo délivrées en sortie simultanément avec les données vidéo dans des données de conteneur vidéo ;
transmettre, à un serveur (470), un message de demande de code de découverte demandant un code de découverte pour fournir des informations sur les données de conteneur vidéo ;
transmettre, à un nœud B évolué, eNB (450), un message de demande d'attribution de ressources demandant l'attribution de ressources pour la transmission des données associées à une vidéo ; générer un message de communication dispositif à dispositif contenant les données associées à une vidéo, un ID de source utilisé par une couche de transmission radio du dispositif de transmission (410), et des informations sur un point temporel où les données vidéo sont délivrées en sortie ;
transmettre le message de communication de dispositif à dispositif généré à un dispositif de réception (430) en utilisant les ressources ; et
délivrer en sortie les données vidéo,
où l'ID source est inclus dans le code de découverte.

**2.** Procédé selon la revendication 1, comprenant en outre :

recevoir le code de découverte du serveur (470) ; et
diffuser le code de découverte reçu.

**3.** Procédé selon la revendication 1, où le message de demande de code de découverte contient au moins un parmi un ID d'application pour identifier une application, un ID de dispositif de transmission pour identifier le dispositif de transmission (410), et un ID de contenu pour identifier les données associées à une vidéo, et un ID unique du dispositif de transmission (410).

4. Procédé selon la revendication 3, comprenant en outre :

recevoir un message de réponse d'attribution de ressources contenant des informations sur les ressources attribuées,
où la transmission du message de communication de dispositif à dispositif généré au dispositif de réception (430) comprend la transmission du message de communication de dispositif à dispositif généré au dispositif de réception (430) pendant que le message de communication de dispositif à dispositif généré est inséré dans les ressources attribuées à partir de l'eNB (450).

5. Procédé selon la revendication 1, où la sortie des données vidéo comprend :

déterminer le point temporel où les données vidéo sont délivrées en sortie ; et
délivrer en sortie les données vidéo au point temporel déterminé.

6. Procédé selon la revendication 1, où la transmission du message de communication de dispositif à dispositif généré au dispositif de réception (430) comprend :

identifier le point temporel où les données vidéo sont délivrées en sortie ;
identifier un point temporel d'attribution de ressources où des ressources pour la transmission des données associées à une vidéo sont attribuées ;
lorsque le point temporel d'attribution de ressources est égal ou ultérieur au point temporel où les données vidéo sont délivrées en sortie, supprimer les données associées à une vidéo ;
lorsque le point temporel d'attribution de ressources est antérieur au point temporel où les données vidéo sont délivrées en sortie, calculer un temps de marge à partir d'une différence entre le point temporel où les données vidéo sont délivrées en sortie et le point temporel d'attribution de ressources ; et
transmettre un message contenant les données associées à une vidéo et le temps de marge au dispositif de réception (430).

7. Procédé selon la revendication 1, où la transmission du message de communication de dispositif à dispositif généré au dispositif de réception (430) comprend :

identifier le point temporel où les données vidéo sont délivrées en sortie ;
identifier un point temporel d'attribution de ressources où des ressources pour la transmission des données associées à une vidéo sont attribuées ;
lorsque le point temporel d'attribution de ressources est égal ou ultérieur au point temporel où les données vidéo sont délivrées en sortie, supprimer les données associées à un vidéo ; et
lorsque le point temporel d'attribution de ressources est antérieur au point temporel où les données vidéo sont délivrées en sortie, transmettre le message de communication de dispositif à dispositif généré au dispositif de réception (430).

8. Procédé de réception de données par un dispositif de réception (430) dans un système de communication sans fil prenant en charge une communication de dispositif à dispositif, le procédé comprenant :

recevoir, à partir d'un dispositif de transmission (410), un code de découverte pour obtenir des informations sur des données de conteneur vidéo ;
recevoir, à partir du dispositif de transmission (410), un message de communication de dispositif à dispositif contenant des données associées à un vidéo, un ID source utilisé par une couche de transmission radio du dispositif de transmission (410), et des informations sur un point temporel où des données vidéo sont délivrées en sortie en utilisant des ressources attribuées d'un nœud B évolué, eNB (450) ; et
délivrer en sortie les données associées à un vidéo sur la base des informations sur le point temporel où les données vidéo sont délivrées en sortie,
où les données associées à un vidéo sont délivrées en sortie simultanément avec les données vidéo, les données associées à un vidéo étant séparées des données vidéo dans les données de conteneur vidéo, où l'ID source est inclus dans le code de découverte,
où les ressources attribuées sont attribuées selon un message de demande d'attribution de ressources demandant l'attribution de ressources pour la transmission des données associées à un vidéo.

9. Procédé selon la revendication 8, comprenant en outre :

transmettre le code de découverte à un serveur (470) ; et

recevoir des informations de code de découverte mappées au code de découverte du serveur (470).

**10.** Procédé selon la revendication 8, où les informations de code de découverte contiennent au moins un parmi un ID d'application pour identifier une application, un ID de dispositif de transmission pour identifier le dispositif de transmission (410), et un ID de contenu pour identifier les données associées à la vidéo, et un ID unique du dispositif de transmission (410).

**11.** Procédé selon la revendication 1 ou 8, où les informations sur le point temporel où la vidéo est délivrée en sortie contiennent au moins l'un parmi le point temporel où la vidéo est délivrée en sortie et un temps de marge entre un point temporel où le message de communication de dispositif à dispositif est transmis et un point temporel où les données vidéo sont délivrées en sortie.

**12.** Procédé selon la revendication 8, où la sortie des données associées à une vidéo comprend :

identifier un premier point temporel où les données sont reçues ;

identifier un deuxième point temporel où les données associées à la vidéo sont délivrées en sortie par une application ;

identifier un temps de marge entre le point temporel où le message de communication de dispositif à dispositif est transmis et un point temporel où les données vidéo sont délivrées en sortie ;

calculer un temps de traitement de réception sur la base d'une différence entre le deuxième point temporel et le premier point temporel ;

lorsque le temps de traitement de réception est plus long qu'un temps de seuil prédéterminé, supprimer les données associées à la vidéo ; et

lorsque le temps de traitement de réception est égal ou plus court que le temps de seuil prédéterminé, délivrer en sortie les données associées à la vidéo.

**13.** Procédé selon la revendication 8, où la sortie des données associées à une vidéo comprend :

identifier un premier point temporel où une application délivre en sortie les données associées à la vidéo ;

identifier un deuxième point temporel où les données associées à la vidéo sont délivrées en sortie par une application ;

lorsqu'une différence entre le premier point temporel et le deuxième point temporel est supérieure à une valeur de seuil prédéterminée, supprimer les données associées à la vidéo ; et

lorsque la différence entre le premier point temporel et le deuxième point temporel est égal ou inférieure à la valeur de seuil prédéterminée, délivrer en sortie les données associées à la vidéo.

**14.** Procédé selon la revendication 8, où les données associées à une vidéo comprennent au moins l'une parmi des données audio, des données de texte, et des données vidéo.

**15.** Dispositif configuré pour mettre en œuvre le procédé selon l'une des revendications 1 à 14.

110      150      130

| TRANSMISSION DEVICE | → PAIRING → | RECEPTION DEVICE |

← AUDIO DATA

170

# FIG.1

201   110       203       130

VIDEO DATA   → AUDIO DATA →

# FIG.2

110

130

TRANSMISSION DEVICE

RECEPTION DEVICE

TRANSMIT AUDIO DATA

~ 301

CALCULATE DELAY TIME ~ 303

TRANSMIT DELAY TIME

~ 305

CORRECT SYNCHRONIZATION THROUGH DELAY TIME ~ 307

TRANSMIT AUDIO DATA

~ 309

FIG.3

410

430

TRANSMISSION DEVICE →AUDIO DATA→ RECEPTION DEVICE

BROADCASTING STATION SERVER

SERVER

((○))

450

490

470

# FIG.4

405

410
TRANSMISSION
DEVICE

505
BROADCAST
DISCOVERY CODE

430
RECEPTION
DEVICE

501
(APP ID, Display ID, Content ID)
+ (Source ID)

503
DISCOVERY
CODE

507
DISCOVERY CODE

(APP ID, Display ID, Content ID)
+ (Source ID)

509

470
SERVER

FIG.5

410
TRANSMISSION
DEVICE

609
BROADCAST
DISCOVERY CODE

430
RECEPTION
DEVICE

601
(APP ID, Display ID, Content ID)
+ (UE ID)

607
DISCOVERY
CODE

611
DISCOVERY CODE

(APP ID, Display ID, Content ID)
+ (Source ID)

613

603
UE ID

610
HSS

Source ID

605

470
SERVER

FIG.6

DISCOVERY CODE MESSAGE

| DISCOVERY CODE | Source ID | ~ 701 |
|---|---|---|

LSB

| DISCOVERY CODE | Null | ~ 703 |
|---|---|---|

LSB

# FIG.7

Aux Out    430

Display 1. Content 1

▷

CLICK USER
REPRODUCTION BUTTON

# FIG.8

FIG.9

| Group index$_1$ | | LCG ID$_1$ | Buffer Size$_1$ | Oct 1 |
|---|---|---|---|---|
| Buffer Size$_1$ | | Group index$_2$ | | Oct 2 |
| LCG ID$_2$ | Buffer Size$_2$ | | | Oct 3 |

...

| Group index$_N$ | | LCG ID$_N$ | Buffer Size$_N$ | Oct 1.5*N-0.5 |
|---|---|---|---|---|
| Buffer Size$_N$ | R | R | R | R | Oct 1.5*N+0.5 |

1001

# FIG.10A

1003

| Group index$_1$ | | LCG ID$_1$ | Buffer Size$_1$ | Oct 1 |
|---|---|---|---|---|
| Buffer Size$_1$ | | Group index$_2$ | | Oct 2 |
| LCG ID$_2$ | Buffer Size$_2$ | | | Oct 3 |

...

| Group index$_{N-1}$ | | LCG ID$_{N-1}$ | Buffer Size$_{N-1}$ | Oct 1.5*N-2 |
|---|---|---|---|---|
| Buffer Size$_{N-1}$ | | Group index$_N$ | | Oct 1.5*N-1 |
| LCG ID$_N$ | Buffer Size$_N$ | | | Oct 1.5*N |

# FIG.10B

30

FIG.11

START

RESOURCE ALLOCATION
REQUEST MESSAGE ~1201

RESOURCE
ALLOCATION REQUEST MESSAGE
FOR TRANSMISSION OF
AUDIO DATA? ~1203

NO

YES

CONTROL RESOURCE ALLOCATION
PARAMETER ~1205

ALLOCATE RESOURCES ~1207

END

FIG.12

| SA | DATA ←<Ts→ DATA ←<Ts→ DATA ←<Ts→ DATA |

# FIG.13

FIG.14

**FIG.15**

FIG.16

410                                                    430

| TRANSMISSION DEVICE | → TIME INFORMATION → | RECEPTION DEVICE |

~1710

T: OUTPUT START TIME OF VIDEO DATA

~1730

T': OUTPUT START TIME OF AUDIO DATA

# FIG.17

FIG.18

FIG.19

410

TRANSMISSION
DEVICE

430

RECEPTION
DEVICE

SEPARATE
VIDEO/AUDIO DATA — 2001

2003 — VIDEO DATA

AUDIO DATA — 2005

2007 — OUTPUT
VIDEO DATA

TRANSMISSION
PROCESSING — 2009

DATA
SCHEDULING — 2011

REMOVE AUDIO DATA
THAT PASSES OUTPUT — 2013
TIME POINT

TRANSMIT MESSAGE
(AUDIO DATA, T, ΔT)

— 2015

CALCULATE OUTPUT
START TIME POINT OF — 2017
AUDIO DATA

OUTPUT AUDIO DATA — 2019

FIG.20

START

VIDEO OUTPUT START TIME POINT (T) — 2101

IDENTIFY RESOURCE ALLOCATION
TIME POINT (T2) — 2103

RESOURCE
ALLOCATION TIME POINT (T2) ≥
VIDEO OUTPUT START TIME
POINT (T)? — 2105

NO → CALCULATE TRANSMISSION
MARGIN TIME (Tm)
(T-T2 = Tm) — 2109

↓

TRANSMIT MESSAGE CONTAINING
AUDIO DATA AND TRANSMISSION
MARGIN TIME (Tm) — 2111

YES

REMOVE AUDIO DATA — 2107

END

FIG.21

START

RECEIVE MESSAGE ~ 2201

RECORD MESSAGE RECEPTION
TIME POINT (T3) ~ 2203

RECORD TIME POINT (T4) AT WHICH
APPLICATION AUDIO DATA IS OUTPUT ~ 2205

IDENTIFY TRANSMISSION
MARGIN TIME (Tm) ~ 2207

CALCULATE RECEPTION
PROCESSING TIME (Td_rx)
(T4 - T3 = Td_rx) ~ 2209

$Td\_rx >$
OUTPUT THRESHOLD TIME (Tth) ? — 2211

NO

YES

REMOVE AUDIO DATA ~ 2213

OUTPUT AUDIO DATA — 2215

END

FIG.22

START

VIDEO OUTPUT START TIME POINT (T) ～2301

IDENTIFY RESOURCE ALLOCATION
TIME POINT (T2) ～2303

2305

RESOURCE
ALLOCATION TIME POINT (T2) ≥
VIDEO OUTPUT START TIME
POINT (T)?

NO

2309

TRANSMIT MESSAGE CONTAINING
AUDIO DATA AND VIDEO
REPRODUCTION TIME (T)

YES

REMOVE AUDIO DATA ～2307

END

FIG.23

START

RECEIVE MESSAGE ~ 2401

RECORD TIME POINT (T4) AT WHICH
APPLICATION OUTPUTS AUDIO DATA ~ 2403

IDENTIFY VIDEO OUTPUT
START TIME POINT (T) ~ 2405

T4 - T >
OUTPUT THRESHOLD TIME (Tth) ? ~ 2407    NO

YES

REMOVE AUDIO DATA ~ 2409    OUTPUT AUDIO DATA ~ 2411

END

FIG.24

2501          2505          2507

| TRANSMITTER | ⬌ | CONTROLLER | ⬌ | INPUT UNIT |

2503                 2509

RECEIVER ⬌ CONTROLLER ⬌ OUTPUT UNIT

STORAGE UNIT — 2511

# FIG.25

2601          2605          2607

TRANSMITTER ⬌ CONTROLLER ⬌ INPUT UNIT

2603                2609

RECEIVER ⬌ CONTROLLER ⬌ OUTPUT UNIT

STORAGE UNIT — 2611

# FIG.26

**EP 3 282 652 B1**

## REFERENCES CITED IN THE DESCRIPTION

### Patent documents cited in the description

- EP 2672721 A1